# EUROPEAN PATENT APPLICATION

(11) **EP 4 625 954 A1**
(43) Date of publication of application: **01.10.2025**
(21) Application number: 24791747.9
(22) Date of filing: 29.02.2024
(51) Int. Cl.: H04M 1/72469

(54) **RESPONSE METHOD FOR ELECTRONIC DEVICE, AND ELECTRONIC DEVICE AND STORAGE MEDIUM**

(30) Priority: 17.04.2023 CN 202310458498
(71) Applicant: Huawei Technologies Co., Ltd., Shenzhen, Guangdong 518129 (CN)
(72) Inventor: ZHOU, Yichao, Shenzhen, Guangdong 518129 (CN); LI, Shun, Shenzhen, Guangdong 518129 (CN)
(74) Representative: Grünecker Patent- und Rechtsanwälte PartG mbB
(86) International application number: PCT/CN2024/079474
(87) International publication number: WO 2024/217159

(57) **Abstract**

Embodiments of this application provide a response method for an electronic device, an electronic device, and a storage medium. The method includes: The electronic device displays a first user interface; the electronic device receives a first button operation performed on a first button; and the electronic device performs a first function or displays a second user interface in response to the first button operation, where the second user interface includes a shortcut bar, and the shortcut bar includes at least one frequently-used service. In this way, when a user needs to use a frequently-used service, the user performs the first button operation, for example, a button tap operation, on the first button, to quickly invoke the shortcut bar, so that the user can quickly find these frequently-used services when the user needs to use the frequently-used service. This can meet different function requirements of the user in various scenarios, thereby improving user experience in human-machine interaction.

## Description

### CROSS-REFERENCE TO RELATED APPLICATIONS

This application claims priority to Chinese Patent Application No. 202310458498.5, filed with the China National Intellectual Property Administration on April 17, 2023 and entitled "RESPONSE METHOD FOR ELECTRONIC DEVICE, ELECTRONIC DEVICE, AND STORAGE MEDIUM", which is incorporated herein by reference in its entirety.

### TECHNICAL FIELD

The present invention relates to the field of electronic technologies, and in particular, to a response method for an electronic device, an electronic device, and a storage medium.

### BACKGROUND

Currently, a conventional physical button, for example, a volume button or a power button, is disposed on one side or two sides of an electronic device. The volume button may include a volume up button and a volume down button. A user may implement a fixed function by pressing and holding the volume button and the power button, by pressing a button a plurality of times, or by performing a combination operation. For example, a screenshot function may be implemented by simultaneously pressing the volume down button and the power button. After the user sets a function of the physical button, when the button is used in different scenarios, only a single fixed function can be implemented, and other frequently-used operations cannot be implemented.

### SUMMARY

Embodiments of this application provide a response method for an electronic device, an electronic device, and a storage medium, to meet different function requirements of a user in various scenarios by using a button.

According to a first aspect, an embodiment of this application provides a response method for an electronic device, applied to an electronic device having a display and a first button. The method includes: The electronic device displays a first user interface; the electronic device receives a first button operation performed on a first button; and the electronic device performs a first function or displays a second user interface in response to the first button operation, where the second user interface includes a shortcut bar, and the shortcut bar includes at least one frequently-used service.

According to the method, when a user needs to use a frequently-used service, the user performs the first button operation, for example, a button tap operation, on the first button, to quickly invoke the shortcut bar, so that the user can quickly find these frequently-used services when the user needs to use the frequently-used service. This can meet different function requirements of the user in various scenarios, thereby improving user experience in human-machine interaction.

In some embodiments, the first user interface includes a home screen or an application interface of a first application, and a function corresponding to a customized button operation is not set for the first application.

In some embodiments, the shortcut bar includes a first service, and the method further includes: The electronic device receives a first operation performed on the first service, and then displays a deletion control in response to the first operation; the electronic device receives a second operation performed on the deletion control; and deletes the first service from the shortcut bar in response to the second operation. In this way, the user can delete a service from the shortcut bar based on a requirement. For example, a service that the user considers to be infrequently used in a subsequent use process can be deleted from the shortcut bar.

In some embodiments, the shortcut bar includes a management control, and the method further includes: The electronic device receives a third operation performed on the management control, and then displays a service list in response to the third operation, where the service list includes at least one service; and the electronic device receives a fourth operation performed on the first service, where the first service is any one of the at least one service, and then adds the first service to the shortcut bar in response to the fourth operation. In this way, the user can add a service to the shortcut bar based on a requirement. For example, a service that the user considers to be frequently used and that has not been added to the shortcut bar can be added to the shortcut bar through a user operation.

In some embodiments, the method further includes: The electronic device receives a second button operation performed on the first button, and then closes the shortcut bar in response to the second button operation. In this way, the user can quickly close the shortcut bar when the user does not need to use the shortcut bar.

In some embodiments, the shortcut bar includes a close control, and the method further includes: The electronic device receives a touch operation performed on the close control, and then closes the shortcut bar in response to the touch operation. In this way, the user can quickly close the shortcut bar when the user does not need to use the shortcut bar.

In some embodiments, the first button operation includes any one of the following operations: a button tap operation, a button press and hold operation, a button double-tap operation, a button triple-tap operation, and a button combination operation. The button combination operation includes a combination operation on at least two physical buttons in a power button, a volume up button, a volume down button, and the first button.

According to a second aspect, an embodiment of this application provides a response method for an electronic device, applied to an electronic device having a display and a first button. The method includes: The electronic device displays a third user interface, where the third user interface includes an application interface of a second application; receives a second button operation performed on the first button; and performs a first function in response to the second button operation, where the first function is determined based on an application scenario corresponding to the third user interface, the second button operation, and a first correspondence, and the first correspondence includes a correspondence between a preset function, a preset application scenario, and a preset button operation.

According to the method, the corresponding function may be determined based on the application scenario corresponding to the third user interface, the second button operation, and the first correspondence. This can meet different function requirements of the user in various scenarios, thereby improving user experience in human-computer interaction.

In some embodiments, before receiving the second button operation performed on the first button, the method further includes: The electronic device displays a fourth user interface, where the fourth user interface includes a button function setting option; the electronic device receives a fifth operation performed on the button function setting option, and then displays an application scenario list in response to the fifth operation, where the application scenario list includes at least one application scenario; the electronic device receives a sixth operation performed on a first preset application scenario, where the first preset application scenario is any application scenario in the application scenario list, and displays a fifth user interface in response to the sixth operation, where the fifth user interface includes at least one preset button operation and a function option list corresponding to each preset button operation, and the function option list includes at least one preset function; the electronic device receives a seventh operation performed on a first preset function, where the first preset function is any preset function in a function option list corresponding to a first preset button operation; and completes setting of a correspondence between the first preset function, the first preset application scenario, and the first preset button operation in response to the seventh operation. In this way, a user may customize functions corresponding to different button operations in each application scenario.

In some embodiments, the first correspondence includes a correspondence between a function of enabling a message bar, a first application scenario, and the second button operation. Before receiving the second button operation performed on the first button, the method further includes: The electronic device receives a notification message, where the notification message is displayed on a first user interface in a floating mode. That the electronic device performs the first function in response to the second button operation includes: In response to the second button operation, the electronic device determines that the third user interface corresponds to the first application scenario; and the electronic device performs the function that is of enabling the message bar and that corresponds to the first application scenario and the second button operation, and displays, in the floating mode after performing the function, the message bar corresponding to the notification message. In this way, when it is inconvenient for the user to enable, by performing a touch operation, the message bar in a display area in which the notification message is located, the user may directly view the notification message by performing a button operation.

In some embodiments, the first correspondence includes a correspondence between a function of starting a frequently-used application, a second application scenario, and the second button operation. That the electronic device performs the first function in response to the second button operation includes: In response to the second button operation, the electronic device determines that the third user interface corresponds to the second application scenario; and performs the function that is of starting the frequently-used application and that corresponds to the second application scenario and the second button operation, and displays a sidebar in a floating mode after performing the function, where the sidebar includes at least one frequently-used application. In this way, the user can quickly find the frequently-used application.

In some embodiments, the first correspondence includes a correspondence between a function of starting an associated application, a third application scenario, and the second button operation. That the electronic device performs the first function in response to the second button operation includes: In response to the second button operation, the electronic device determines that the third user interface corresponds to the third application scenario; and performs the function that is of starting the associated application and that corresponds to the third application scenario and the second button operation, and displays a sixth user interface after performing the function, where the sixth user interface includes at least a third application associated with the third application scenario. In this way, the user can quickly view an application interface of the associated application when the user needs to view the associated application.

In some embodiments, the first correspondence includes a correspondence between a function of switching to floating-window display, a split-screen display scenario, and the second button operation. Displaying the third user interface includes: displaying the application interface of the second application and an application interface of a third application on the display in a split-screen mode. Performing the first function in response to the second button operation includes: in response to the second button operation, determining that the third user interface corresponds to the split-screen display scenario; and performing the function that is of switching to floating-window display and that corresponds to the split-screen display scenario and the second button operation, and after performing the function, displaying the application interface of the second application on the display in a full-screen mode, and displaying the application interface of the third application in a floating window. In this way, switching can be conveniently performed through a button operation when the user needs to switch from split-screen display to floating-window display.

In some embodiments, the first correspondence includes a correspondence between a function of switching to split-screen display, a floating-window display scenario, and the second button operation. Displaying the third user interface includes: displaying the application interface of the second application on the display in a full-screen mode, and displaying an application interface of a third application in a floating window. Performing the first function in response to the second button operation includes: in response to the second button operation, determining that the third user interface corresponds to the floating-window display scenario; and performing the function that is of switching to split-screen display and that corresponds to the floating-window display scenario and the second button operation, and displaying the application interface of the second application and the application interface of the third application on the display in a split-screen mode after performing the function. In this way, switching can be conveniently performed through a button operation when the user needs to switch from floating-window display to split-screen display.

In some embodiments, the first correspondence includes a correspondence between a function of switching an inter-application display mode, a floating-window display scenario, and the second button operation. Displaying the third user interface includes: displaying the application interface of the second application on the display in a full-screen mode, and displaying an application interface of a third application in a floating window. Performing the first function in response to the second button operation includes: in response to the second button operation, determining that the third user interface corresponds to the floating-window display scenario; and performing the function that is of switching the inter-application display mode and that corresponds to the floating-window display scenario and the second button operation, and after performing the function, displaying the application interface of the second application in the floating window, and displaying the application interface of the third application on the display in the full-screen mode. In this way, switching can be conveniently performed through a button operation when the user needs to switch between an application interface displayed in the floating window and an application interface displayed in the full-screen mode.

In some embodiments, the electronic device includes an inner screen and an outer screen. The first correspondence includes a correspondence between a function of pushing content from the inner screen to the outer screen, an inner-screen display scenario, and the second button operation. Displaying the third user interface includes: The electronic device displays the third user interface on the inner screen, where the third user interface includes first content. That the electronic device performs the first function in response to the second button operation includes: In response to the second button operation, the electronic device determines that the third user interface corresponds to an outer-screen display scenario; and displays the first content on the outer screen. In this way, the first content is pushed, through a button operation, to the outer screen that is convenient for viewing, so that it is more convenient for the user to view the first content.

In some embodiments, the second button operation includes any one of the following operations: a button tap operation, a button press and hold operation, a button double-tap operation, a button triple-tap operation, and a button combination operation. The button combination operation includes a combination operation on at least two physical buttons in a power button, a volume up button, a volume down button, and the first button.

According to a third aspect, an embodiment of this application further provides an electronic device. The electronic device includes modules/units for performing the method in any embodiment in any one of the foregoing aspects. These modules/units may be implemented by hardware, or may be implemented by hardware executing corresponding software.

According to a fourth aspect, an embodiment of this application provides an electronic device, including a processor, a memory, a first button, and a display. The display is configured to display a user interface; the first button is configured to receive a button operation; and the memory is configured to store one or more computer programs. When the computer program is executed by the processor, the electronic device is enabled to perform the method according to any one of the first aspect, the second aspect, and embodiments of the first aspect and the second aspect.

According to a fifth aspect, an embodiment of this application further provides a computer-readable storage medium. The computer-readable storage medium includes a computer program. When the computer program is run on an electronic device, the electronic device is enabled to perform the method according to any one of the first aspect, the second aspect, and embodiments of the first aspect and the second aspect.

According to a sixth aspect, an embodiment of this application further provides a computer program product. When the computer program product runs on a terminal, the electronic device is enabled to perform the method according to any one of the first aspect, the second aspect, and embodiments of the first aspect and the second aspect.

For beneficial effects of the third aspect to the sixth aspect, refer to the beneficial effects of the first aspect or the second aspect. Details are not described again.

### BRIEF DESCRIPTION OF DRAWINGS

FIG. 1 is a diagram of a hardware structure of an electronic device according to an embodiment of this application;
FIG. 2A is a diagram of a software structure of an electronic device according to an embodiment of this application;
FIG. 2B-1 and FIG. 2B-2 are a diagram of a working procedure of software and hardware of an electronic device according to an embodiment of this application;
FIG. 3 is a diagram of a group of user interfaces according to an embodiment of this application;
FIG. 4A to FIG. 4E are diagrams of a group of user interfaces according to an embodiment of this application;
FIG. 5 is a flowchart of a response method for an electronic device according to an embodiment of this application;
FIG. 6A to FIG. 6D are diagrams of a group of user interfaces according to an embodiment of this application;
FIG. 7A and FIG. 7B are diagrams of a group of user interfaces according to an embodiment of this application;
FIG. 8A and FIG. 8B are diagrams of a group of user interfaces according to an embodiment of this application;
FIG. 9A to FIG. 9E are diagrams of a group of user interfaces according to an embodiment of this application;
FIG. 10A and FIG. 10B are diagrams of a group of user interfaces according to an embodiment of this application;
FIG. 11A and FIG. 11B are diagrams of a group of user interfaces according to an embodiment of this application;
FIG. 12A and FIG. 12B are diagrams of a group of user interfaces according to an embodiment of this application;
FIG. 13A to FIG. 13D are diagrams of a group of user interfaces according to an embodiment of this application;
FIG. 14A to FIG. 14C are diagrams of a group of user interfaces according to an embodiment of this application;
FIG. 15 is a flowchart of a response method for an electronic device according to an embodiment of this application; and
FIG. 16 is a diagram of a hardware structure of an electronic device according to an embodiment of this application.

### DESCRIPTION OF EMBODIMENTS

The following clearly and completely describes the technical solutions in embodiments of this application with reference to the accompanying drawings in embodiments of this application. Terms used in the following embodiments are merely intended to describe specific embodiments, but are not intended to limit this application. The terms "one", "a", "the", "the foregoing", "this", and "the one" of singular forms used in this specification and the appended claims of this application are also intended to include expressions such as "one or more", unless otherwise specified in the context clearly. It should be further understood that, in embodiments of this application, "one or more" means one, two, or more, and "and/or" describes an association relationship between associated objects, and indicates that three relationships may exist. For example, A and/or B may indicate the following cases: Only A exists, both A and B exist, and only B exists, where A and B may be singular or plural. The character "/" usually indicates an "or" relationship between the associated objects.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "contain", "have", and variants thereof all mean "include but are not limited to", unless otherwise specifically emphasized in another manner.

"A plurality of" in embodiments of this application means two or more. It should be noted that, in descriptions of embodiments of this application, terms such as "first" and "second" are merely intended for distinction in description, but shall not be construed as indicating or implying relative importance or indicating or implying a sequence.

This application provides a response method for an electronic device, an electronic device, and a storage medium, to meet different function requirements of a user in various scenarios by using a button. The method and the electronic device are based on a same technical concept. Because the method and the electronic device have similar principles for resolving the problem, reference may be mutually made to implementations of the electronic device and the method. No repeated descriptions are provided.

In the solutions provided in embodiments of this application, a physical button is newly added to the electronic device. For ease of description below, the newly added physical button is referred to as a first button in the following embodiments. A user may set different preset button operations for the first button, where each preset button operation may be used to control different functions of the electronic device in different scenarios. For example, the preset button operation is a tap operation performed on the first button. For example, in a scenario in which the electronic device displays a home screen, the electronic device receives the tap operation performed on the first button, and displays the first window in response to the tap operation. The first window includes an application that can implement a shortcut function by using a button operation. For example, in a scenario in which the electronic device receives a notification message of social software when displaying a game interface, the electronic device receives the tap operation performed on the first button, and displays a chat window of the social software in a floating mode in response to the tap operation. In this way, the preset button operation can be performed on the first button, to meet different function requirements of the user in various scenarios.

The following describes the electronic device, a graphical user interface (graphical user interface, GUI) used for such an electronic device, and embodiments for using such an electronic device. In some embodiments of this application, the electronic device is a device that is configured with a display and a first button and that can perform a response method for the electronic device through the display and the first button. For example, the electronic device may be a mobile phone, a tablet computer, a notebook computer, a netbook, a vehicle-mounted device, a business intelligent terminal (including a video phone, a conference desktop intelligent terminal, and the like), a personal digital assistant (personal digital assistant, PDA), an augmented reality (augmented reality, AR)/virtual reality (virtual reality, VR) device, or the like. The electronic device includes a component (for example, a processor, an application processor, an image processor, or another processor) that can implement a data processing function and a component (for example, a display) that can display a user interface. An example embodiment of the electronic device includes but is not limited to a device using iOS^{®}, Android^{®}, Microsoft^{®}, or another operating system. The electronic device may alternatively be another portable device, for example, a laptop (laptop) with a touch-sensitive surface (for example, a touch panel). It should further be understood that, in some other embodiments of this application, the electronic device may alternatively be a desktop computer with a touch-sensitive surface (for example, a touch panel), instead of a portable electronic device. A specific form of the electronic device is not limited in embodiments of this application.

A structure of the electronic device is further described with reference to the accompanying drawings.

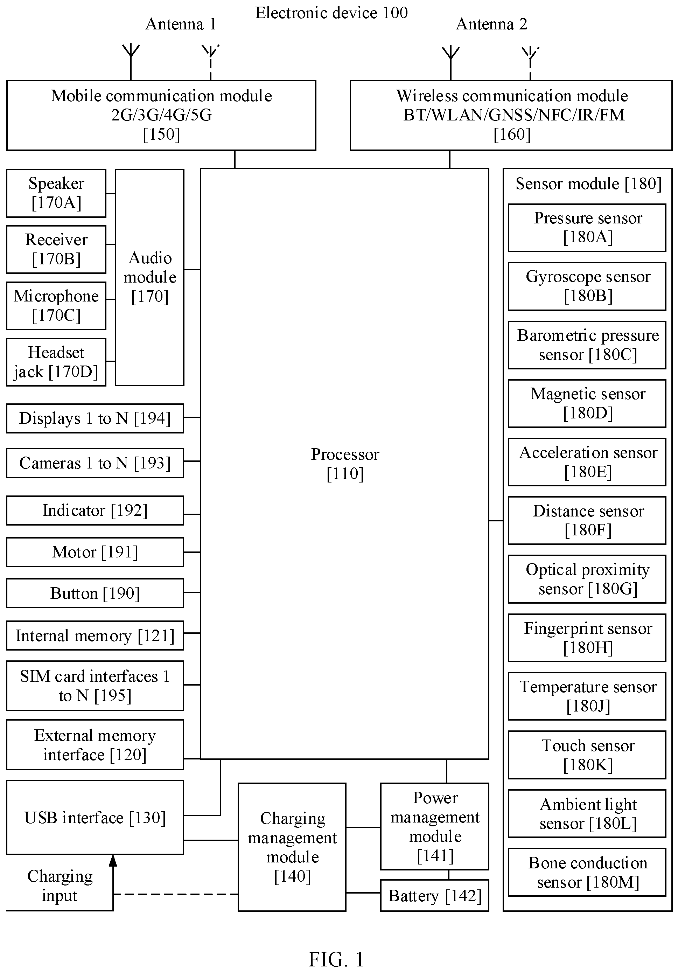

FIG. 1 is only a diagram of a hardware structure of an electronic device 100 according to an embodiment of this application. Based on the hardware structure shown in FIG. 1, another structural modification may further exist. As shown in FIG. 1, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include one or more of the following: a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The following describes in detail the components of the electronic device 100 shown in FIG. 1.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. In some embodiments, the electronic device 100 may alternatively include one or more processors 110. The processor may be a nerve center and a command center of the electronic device 300. The processor may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the instructions or the data may be directly invoked from the memory, so that repeated access can be avoided, and a waiting time of the processor 110 can be reduced, thereby improving system efficiency.

In some embodiments, the processor 110 may include one or more interfaces. For example, the interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like. It may be understood that an interface connection relationship between modules illustrated in this embodiment of this application is merely an example for description, and does not constitute a limitation on the structure of the electronic device 100.

The charging management module 140 is configured to receive a charging input from a charger. The power management module 141 is configured to connect to the battery 142, the charging management module 140, and the processor 110. A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further reused to improve antenna utilization. For example, the antenna 1 may be reused as a diversity antenna of a wireless local area network. In some other embodiments, the antenna may be used in combination with a tuning switch.

The mobile communication module 150 may provide a solution, applied to the electronic device 100, to wireless communication including 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same device as at least some modules in the processor 110.

The modem processor may include a modulator and a demodulator. The modulator is configured to modulate a to-be-sent low-frequency baseband signal into an intermediate- or highfrequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same device as the mobile communication module 150 or another functional module.

The wireless communication module 160 may provide a solution, applied to the electronic device 100, to wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology.

The electronic device 100 may implement a display function through the GPU, the display 194, the application processor, and the like. The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

In some other embodiments, the electronic device 100 may implement a photographing function through the ISP, the camera 193, the video codec, the GPU, the display 194, the application processor, and the like.

The external memory interface 120 may be used to connect to an external memory card, for example, a micro SD card, to extend a storage capability of the electronic device 100. The external memory card communicates with the processor 110 through the external memory interface 120, to implement a data storage function. For example, files such as music and videos are stored in the external memory card.

The internal memory 121 may be configured to store computer-executable program code. The executable program code includes instructions. The internal memory 121 may include a program storage area and a data storage area. The program storage area may store an operating system and an application required by at least one function. In addition, the internal memory 121 may include a high-speed random access memory, or may include a nonvolatile memory, for example, at least one magnetic disk storage device, a flash memory, or a universal flash storage (universal flash storage, UFS). The processor 110 runs instructions stored in the internal memory 121 and/or instructions stored in the memory disposed in the processor, to perform various function applications and data processing of the electronic device 100.

The electronic device 100 may implement an audio function, for example, music playing and recording, through the audio module 170, the speaker 170A, the receiver 170B, the microphone 170C, the headset jack 170D, the application processor, and the like.

The electronic device 100 may receive an input from the button 190, and generate a button signal input related to a user setting and function control of the mobile phone 100. For example, the button 190 may include a power button, a volume up button, a volume down button, and the like that are disposed on a right side of the electronic device. In embodiments of this application, the button 190 may further include a first button disposed on the electronic device. The first button may be used to implement a corresponding customization function in different scenarios by using an operation gesture that is set by a user. The first button may be disposed on a side edge of the electronic device, for example, disposed on a left edge or a right edge. Alternatively, the first button may be disposed at another location of the electronic device. A specific location at which the first button is disposed is not limited in this application. A name of the first button may alternatively be a smart button, a function button, a shortcut button, a customized button, or another name. The name of the first button is not limited in this application either. The first button is used as an example for description in the following embodiments.

Although not shown in FIG. 1, the electronic device 100 may further include a Bluetooth apparatus, a positioning apparatus, a flash, a micro projection apparatus, a near field communication (near field communication, NFC) apparatus, and the like. Details are not described herein.

It may be understood that the structure shown in this embodiment of this application does not constitute a specific limitation on the electronic device 100. In some other embodiments of this application, the electronic device 100 may include more or fewer components than those shown in FIG. 1, or a combination of some components, or splits from some components, or an arrangement of different components. The components shown in FIG. 1 may be implemented by hardware, software, or a combination of software and hardware.

The following embodiments may be all implemented by the electronic device 100 having the foregoing hardware structure.

A software system of the electronic device may use a layered architecture, an event-driven architecture, a microkernel architecture, a microservice architecture, or a cloud architecture. In embodiments of this application, a software system (for example, an Android (Android^{®}) system) with a layered architecture is used as an example to describe a software structure of the electronic device.

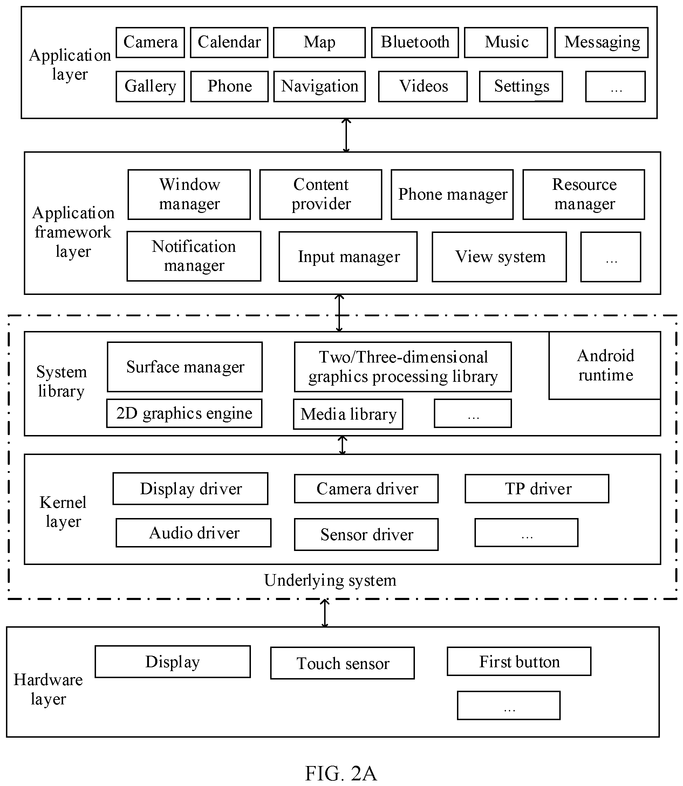

FIG. 2A is a diagram of an example of a layered software structure of an electronic device according to an embodiment of this application. In a layered architecture, a software system of the electronic device is divided into several layers, and each layer has a clear role and task. The layers communicate with each other through a software interface. In some embodiments, the Android system is divided into four layers: an application (application) layer, an application framework layer (framework, FWK), an Android runtime (Android runtime) and system library, and a kernel layer. Layering of the software structure of the electronic device is not limited in embodiments of this application. It should be understood that, in FIG. 2A, a hardware layer in the electronic device is further added based on the Android system.

It should be understood that modules included in the layers shown in FIG. 2A are modules in this embodiment of this application, and modules included in the following layers do not constitute a limitation on a structure of the electronic device and a layer (example description) at which modules are deployed. In some embodiment, the modules shown in FIG. 2A may be separately deployed, or several modules may be deployed together. Division of the modules in FIG. 2A is an example. In some embodiment, names of modules shown in FIG. 2A are examples for description.

The application layer may include a series of application packages. The application layer may include but is not limited to applications such as Camera, Gallery, Calendar, Phone, Map, Navigation, Bluetooth, Music, Videos, Settings, and Messaging. In some embodiments, the application layer further includes a home screen launcher (Launcher). The launcher is a home screen launcher in the Android system, and a user interface (user interface, UI) of the Android system is collectively referred to as the launcher. The user interface may include icons of applications installed on the electronic device. For example, the user interface includes a Phone icon, an Email icon, a Calendar icon, a Camera icon, and the like. A user may tap these shortcut icons to start corresponding applications.

The application program framework layer provides an application programming interface (application programming interface, API) and a programming framework for an application at the application layer. The application framework layer may include some predefined functions.

As shown in FIG. 2A, the application framework layer may include a window manager, a content provider, a view system, a phone manager, a resource manager, a notification manager, an input manager, and the like.

The window manager is configured to manage a window program. The window manager may obtain a size of the display, determine whether there is a status bar, perform screen locking, take a screenshot, and the like. The content provider is configured to: store and obtain data, and enable the data to be accessed by an application. The data may include a video, an image, an audio, calls that are made and answered, a browsing history and bookmarks, an address book, and the like. The window manager may include PhoneWindowManager.

The view system includes visual controls such as a control for displaying a text and a control for displaying an image. The view system may be configured to construct an application. A display interface may include one or more views. For example, a display interface including a Messaging notification icon may include a view for displaying a text and a view for displaying an image.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification message may automatically disappear after a short pause without a user interaction. For example, the notification manager is configured to notify download completion, give a message notification, and the like. The notification manager may alternatively be a notification that appears in a top status bar of the system in a form of graph or scroll bar text, for example, a notification of an application that runs on a background, or may be a notification that appears on a screen in a form of dialog window. For example, text information is prompted in the status bar, an alert tone is made, the electronic device vibrates, or an indicator blinks.

The input manager may include EventHub, InputReader, and InputDispatcher.

The Android runtime includes a core library and a virtual machine. The Android runtime is responsible for scheduling and management of the Android system.

The core library includes two parts: a function that needs to be called in Java language and a core library of Android. The application layer and the application framework layer run on the virtual machine. The virtual machine executes Java files at the application layer and the application framework layer as binary files. The virtual machine is configured to implement functions such as object lifecycle management, stack management, thread management, security and exception management, and garbage collection.

The system library may include a plurality of functional modules, such as a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of frequently used audio and video formats, and static image files. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer may include a hardware driver, configured to drive the hardware to work. A driver layer shown in FIG. 2A may include a display driver, a camera driver, an audio driver, and a sensor driver.

The hardware layer may include various hardware in the electronic device. For example, the hardware layer may include a display, a first button, and various sensors, for example, a touch sensor.

With reference to FIG. 2A, the following describes an example of a button event processing procedure.

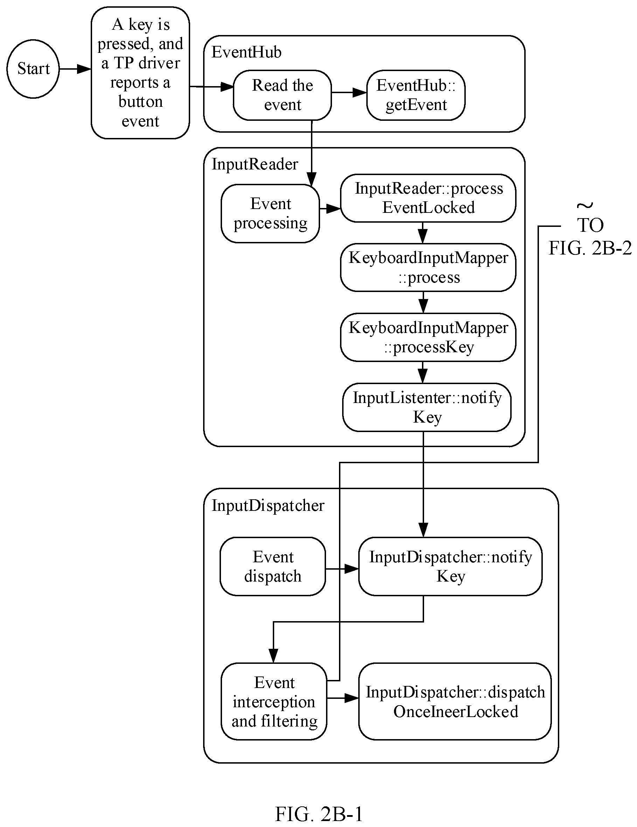

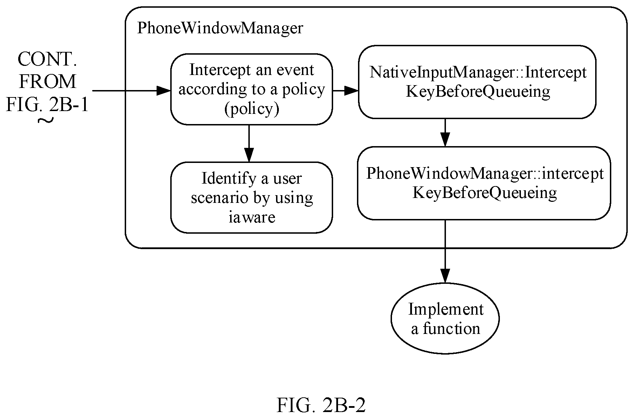

In an example, the electronic device may receive a button operation for the first button at the hardware layer. The button operation may be an operation of tapping the first button, an operation of pressing and holding the first button, an operation of double-tapping the first button, an operation of triple-tapping the first button, or the like. As shown in FIG. 2B-1 and FIG. 2B-2, the first button (Key) is pressed, the first button detects the button operation, and the electronic device reports an input (Input) event to the application layer through the TP driver at the kernel layer. The input event is a button event. EventHub invokes an EventHub::getEvents () function to read the event. The read button event may be stored in a buffer, and InputReader processes the button event.

After reading the button event, InputReader invokes a processEventLocked () function to process the event. After the processEventLocked () function is processed, InputReader invokes a KeyboardInputMapper::process function to process the button event. InputDevice stores many InputMappers. Each type of InputMapper corresponds to a type of device, for example, Touch, Keyboard, or Vibrator. Invoking a process function of InputDevice is to transfer the input event to each InputMapper. A matched InputMapper processes the input event, and an unmatched InputMapper is ignored. In this embodiment of this application, the input event is the button event, and the matched InputMapper is KeyboardInputMapper. In this way, the process function transfers the button event to KeyboardInputMapper; invokes processKey to process the button event, for example, preprocess the button event to obtain down (down) and up (up) records and logic judgment; and encapsulates related information of the button event into NotifyKeyArgs.

Then, InputDispatcher:: notifyKey is invoked to process the button event. For example, NotifyKeyArgs, keyCode, flag, metaState, and the like are encapsulated into KeyEvent. InputDispatcher performs event interception and filtering. If the input event is the button event, InputDispatcher sends KeyEvent to PhoneWindowManager. PhoneWindowManager intercepts the event according to a policy, identifies a user scenario by using iaware, determines a to-be-performed function based on the user scenario and a button operation type corresponding to the button event, and performs the function.

The following describes some examples of user interfaces (user interfaces, UI) provided by the electronic device 100. A user interface in this application may be presented on a display, is a medium interface for interaction and information exchange between an application or an operating system and a user, and implements conversion between an internal form of information and a form acceptable to the user. The user interface is usually represented in a form of graphical user interface (graphical user interface, GUI), and is a user interface that is displayed in a graphical manner and that is related to a computer operation. The user interface may be an interface element like an icon, a window, or a control displayed on a display of the electronic device. The control may include a visual interface element like an icon, a button, a menu, a tab, a text box, a dialog box, a status bar, a navigation bar, and a widget.

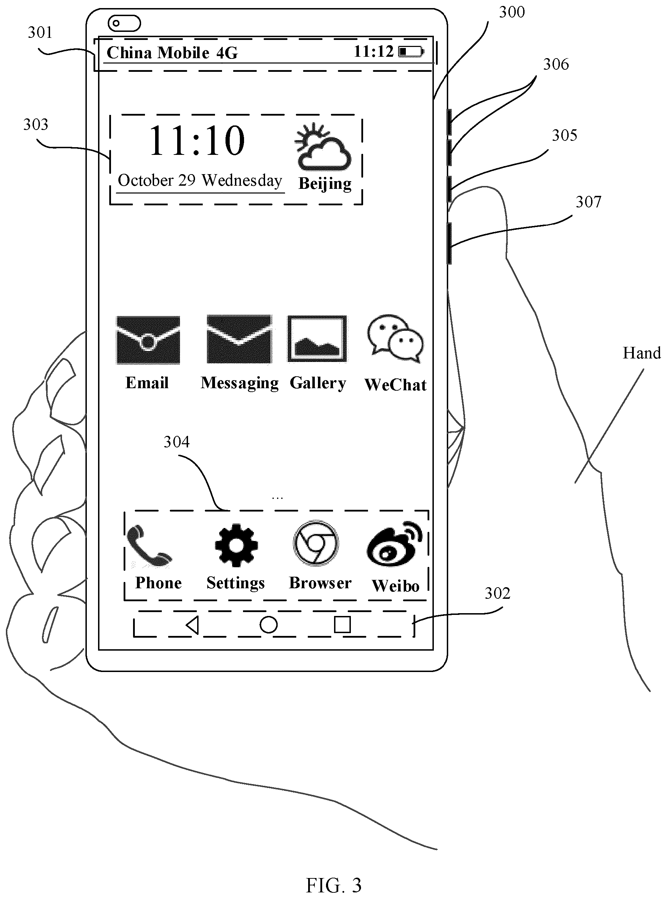

FIG. 3 is a diagram of an example of a user interface 200 displayed by an electronic device 100.

As shown in FIG. 3, the user interface 300 is a home screen of the electronic device. The user interface 300 may include a status bar 301, a navigation bar 302 that can be hidden, a time and weather widget (widget) 303, and various application icons such as a WeChat icon, a Gallery icon, and a Messaging icon. The status bar 301 includes an operator name (for example, China Mobile), a mobile network (for example, 4G), time, a state of charge, and the like. The navigation bar 302 may include a back (back) button icon, a home (home) button icon, and a forward button icon. In addition, it may be understood that, in some embodiments, the status bar 301 may further include a Bluetooth icon, a Wi-Fi icon, an alarm clock icon, an external device icon, and the like. It may be further understood that, in some other embodiments, the user interface 300 shown in FIG. 3 may further include a dock bar 304. The dock bar 304 may include frequently-used application icons such as a Phone icon, a Settings icon, a Browser icon, and a Weibo icon shown in FIG. 3. After the processor 110 detects a touch event of a finger (or a stylus or the like) of a user on an application icon, in response to the touch event, the processor 110 starts a user interface of an application corresponding to the application icon, and displays the user interface of the application on the display 194.

It may be understood that FIG. 3 merely shows an example of a user interface of the electronic device 100, and shall not constitute a limitation on embodiments of this application.

At least one physical button is newly added to the electronic device in this embodiment of this application. For example, as shown in FIG. 3, in addition to the power button 305 and the volume button 306, the electronic device may further include a first button 307. The first button 307 may be configured to control different functions of the electronic device by using a preset button operation that is set by the user in different scenarios.

It should be understood that the first button 307 may be located on any side edge of the electronic device 100. For example, FIG. 3 shows an example in which the first button 307, the power button 305, and the volume button 306 are located on a same side edge of the electronic device 100. When the user holds the electronic device with the right hand, the user may perform a button operation on the first button 307 by using a right thumb, to implement a corresponding function. In some other embodiments, the first button 307, the power button 305, and the volume button 306 may alternatively be located on different side edges of the electronic device 100. A specific location of the first button is not limited in this application.

In this embodiment of this application, the user may perform an operation on the first button to implement a corresponding function. For example, the user may perform an operation on the first button, so that the electronic device performs any one of an AI Touch function, a screenshot function, or a voice assistant call-out function.

In this embodiment of this application, the user may perform an operation on the first button to invoke a shortcut bar, where the shortcut bar may include at least one frequently-used service. When the user needs to use a frequently-used service in the electronic device, the user may perform a button operation on the first button to invoke the shortcut bar, so that the user can conveniently and quickly find the frequently-used service that needs to be used.

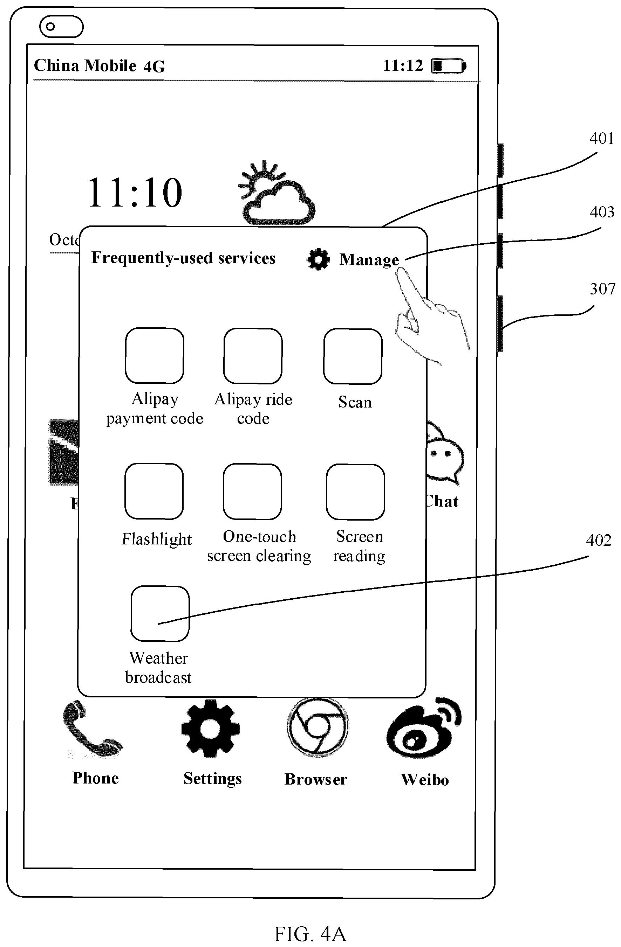

For example, the electronic device displays the home screen 300 shown in FIG. 3. The user performs a button operation on the first button 307, for example, a button tap operation on the first button. In response to the button tap operation, the electronic device displays a user interface shown in FIG. 4A. The user interface may include a shortcut bar 401, where the shortcut bar 401 may be displayed on the home screen in a floating mode. The shortcut bar 401 may include an icon of at least one frequently-used service, for example, an Alipay payment code icon, an Alipay ride code icon, a Scan icon, a Flashlight icon, a One-touch screen clearing icon, a Screen reading icon, and a Weather broadcast icon shown in FIG. 4A. The user may perform an operation on an icon of a frequently-used service, to use a function of the frequently-used service. The Weather broadcast icon 402 in FIG. 4A is used as an example for description. When receiving an operation (for example, a tap operation) performed on the Weather broadcast icon 402, the electronic device displays an application interface of weather broadcast in response to the operation. Then, the user may perform a touch operation on the application interface of weather broadcast, to use a function of broadcasting weather. In this example, when the user needs to use these frequently-used services, the user performs the button tap operation on the first button, to quickly invoke the shortcut bar 401, so that the user can quickly find these frequently-used services when the user needs to use the frequently-used services. This can meet different function requirements of the user in various scenarios, thereby improving user experience in human-machine interaction.

It should be understood that the shortcut bar 401 may include icons of more or fewer frequently-used services. The example shown in FIG. 4A does not limit a quantity of icons of frequently-used services included in the shortcut bar 401, and does not limit a type of the frequently-used service. In this embodiment of this application, a quantity of icons that correspond to the frequently-used services and that can be displayed in the shortcut bar 401 is limited. For example, nine icons can be displayed in the shortcut bar 401. If the shortcut bar 401 includes a large quantity of frequently-used services, for example, if the shortcut bar 401 includes 15 frequently-used services, icons of all frequently-used services cannot be displayed in the shortcut bar 401 at a time, and icons of only nine frequently-used services can be displayed at a time. In this case, an operation (for example, sliding up or sliding down) may be performed on the shortcut bar 401, and the icons of the frequently-used services are displayed in the shortcut bar 401 in a scrolling mode.

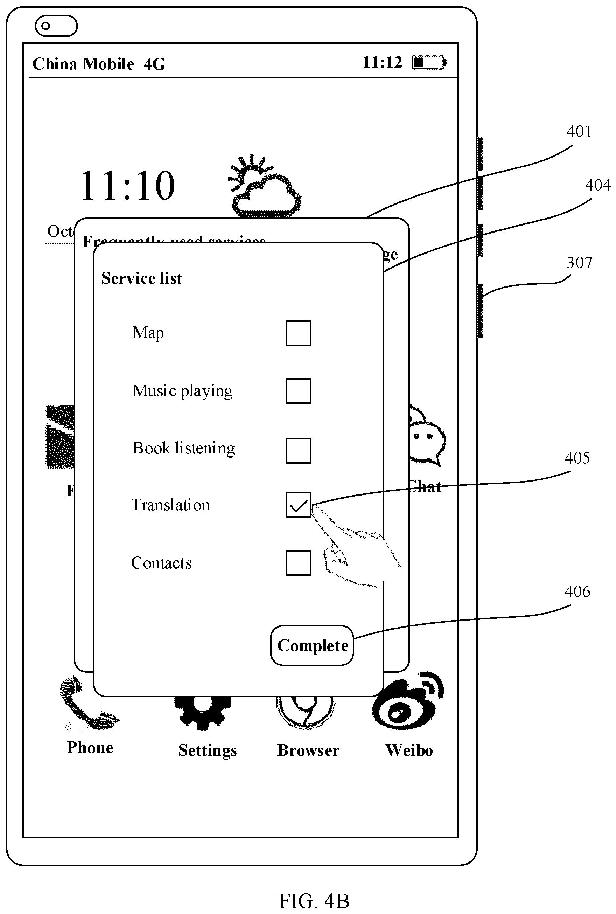

In some embodiments, the user may further manage, by performing an operation, the frequently-used service included in the shortcut bar 401, for example, add a frequently-used service to the shortcut bar 401. The shortcut bar 401 may further include at least one control, for example, a management control 403 shown in FIG. 4A. When receiving an operation (for example, a tap operation) performed on the management control 403, the electronic device displays, in response to the operation, a user interface shown in FIG. 4B. The user interface includes a service list 404, the service list 404 may be displayed on the home screen and the shortcut bar 401 in a floating mode. As shown in FIG. 4B, the service list 404 may be displayed in a partial display area on the display, or may be displayed in a full-screen mode. This is not limited herein.

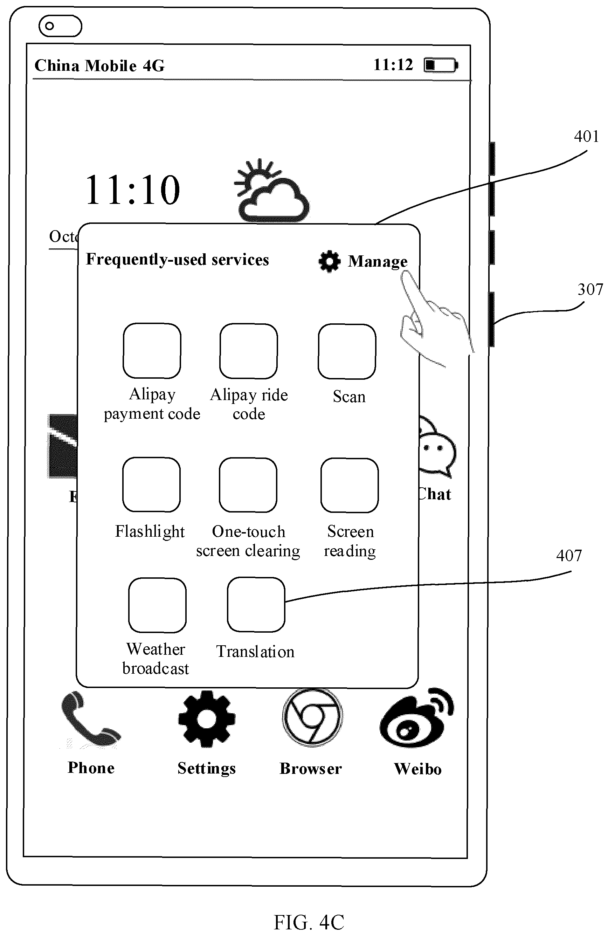

As shown in FIG. 4B, the service list 404 may include various services, for example, including but not limited to services such as a map, music playing, book listening, translation, and contacts. The user may select a service from the service list 404 and add the service to the shortcut bar 401. The service list 404 may further include a selection box corresponding to each service. The user may perform an operation on the selection box, to select a service corresponding to the selection box and add the service to the shortcut bar 401. For example, when receiving an operation, for example, a tap operation, performed on a selection box 405 corresponding to the translation service, the electronic device selects the translation service. The service list 404 may further include a completion control 406. After the user selects a service that needs to be added, the selected service may be added to the shortcut bar 401 by performing an operation on the completion control 406. For example, after the translation service is selected, when the electronic device receives the operation performed on the completion control 406, for example, the operation is a tap operation, the electronic device adds the translation service to the shortcut bar 401 in response to the tap operation, and displays a user interface shown in FIG. 4C. Compared with content in the shortcut bar 401 in FIG. 4A, a translation icon 407 is added to the shortcut bar 401 in FIG. 4C. In this embodiment of this application, another service may be further added to the shortcut bar 401 with reference to an interface change process in FIG. 4A to FIG. 4C. Details are not listed one by one herein.

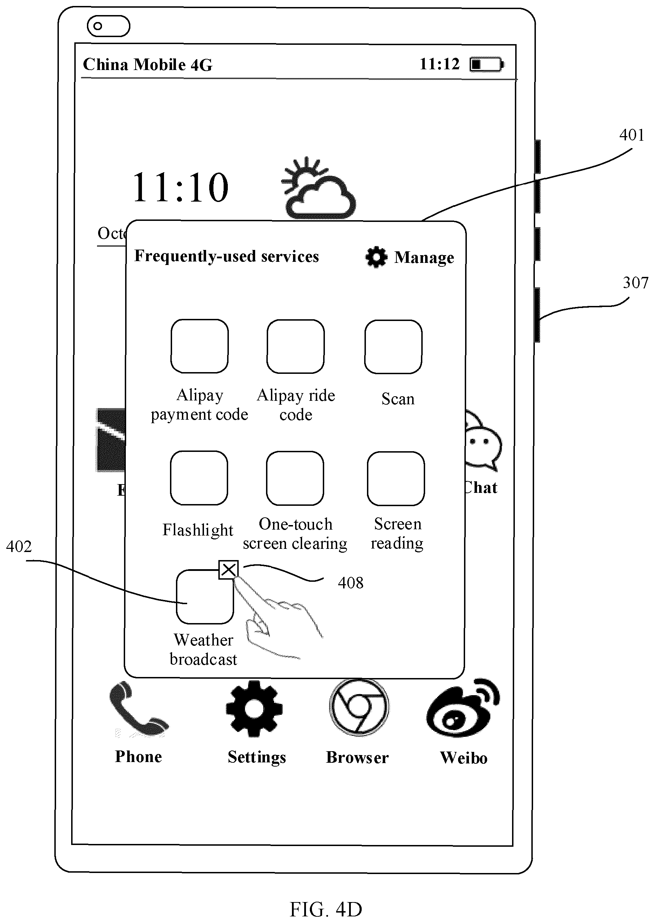

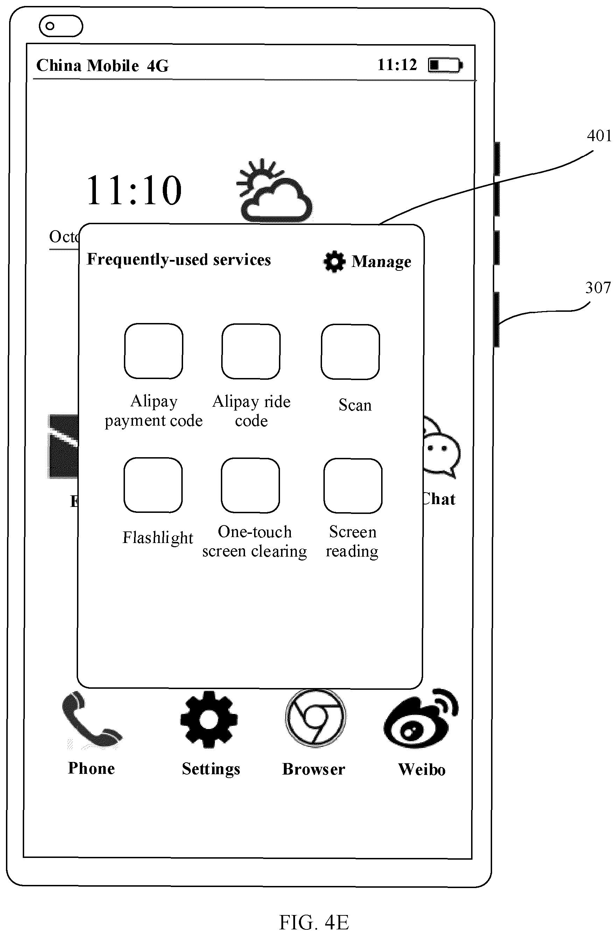

In some embodiments, the user may further delete a frequently-used service from the shortcut bar 401 by performing an operation. For example, the weather broadcast service in the shortcut bar 401 in FIG. 4A is to be deleted. When the electronic device receives an operation, for example, a press and hold operation, performed on the Weather broadcast icon 402, the electronic device displays, in response to the press and hold operation, a user interface shown in FIG. 4D, where the user interface includes a deletion control 408 corresponding to the weather broadcast service. When the electronic device receives an operation, for example, a tap operation, performed on the deletion control 408, the electronic device deletes the Weather broadcast icon 402 from the shortcut bar 401 in response to the tap operation, and the electronic device displays a user interface shown in FIG. 4E. Compared with the shortcut bar 401 in FIG. 4A and the shortcut bar 401 in FIG. 4D, the shortcut bar 401 on the user interface shown in FIG. 4E does not include the Weather broadcast icon 402. With reference to the examples shown in FIG. 4A, FIG. 4D, and FIG. 4E, the user can delete an infrequently-used service from the shortcut bar 401.

The foregoing shows examples of performing an operation, for example, a press and hold operation, on a single frequently-used service, and deleting a single frequently-used service from the shortcut bar 401. In some embodiments, an operation is performed on the shortcut bar 401, for example, a press and hold operation is performed in any area in the shortcut bar. In response to the press and hold operation, a deletion control corresponding to each frequently-used service is displayed, and the user may perform an operation on deletion controls of a plurality of frequently-used services, to delete the plurality of frequently-used services from the shortcut bar 401 at a time.

In some embodiments, two child controls, namely, an add child control and a deletion child control, may be further integrated into the management control 403. When receiving an operation, for example, a tap operation, performed on the management control 403, the electronic device displays the add child control and the deletion child control. When receiving an operation, for example, a tap operation, performed on the add child control, the electronic device displays the service list 404 shown in FIG. 4B. When receiving an operation, for example, a tap operation, performed on the deletion child control, the electronic device displays a frequently-used service list. The frequently-used service list includes all frequently-used services in the shortcut bar and a selection box corresponding to each service. If the user wants to delete the weather broadcast service, the user selects a selection box corresponding to the weather broadcast service, to delete the weather broadcast service from the shortcut bar 401.

In the foregoing embodiments, an example in which when the electronic device displays the home screen, the electronic device receives the button operation performed on the first button 307, to open the shortcut bar 401 is used for description. In embodiments of this application, the button operation for opening the shortcut bar 401 may include but is not limited to any one of the following: a button tap operation, a button press and hold operation, a button double-tap operation, a button triple-tap operation, and a button combination operation that are performed on the first button 307. The button combination operation may be a button combination operation on at least one physical button in a power button, a volume up button, a volume down button, and the first button. This is not limited in this application.

In some embodiments, for an application for which a function corresponding to a button operation is not set in the electronic device, when the electronic device displays an application interface of any application, the electronic device may open the shortcut bar 401 in response to a button operation, for example, a button tap operation, performed on the first button 307. A scenario in which the shortcut bar 401 is opened is not limited in embodiments of this application.

In the foregoing embodiments, after the shortcut bar 401 is opened, if the shortcut bar 401 does not need to be used, the shortcut bar 401 may be closed through a user operation, and the electronic device no longer displays the shortcut bar 401.

In some embodiments, the shortcut bar 401 may be closed by performing a button operation on the first button. For example, when the electronic device displays the user interface shown in FIG. 4D, the user interface includes the shortcut bar 401. When the electronic device receives a button operation, for example, a button tap operation, performed on the first button, the electronic device closes the shortcut bar 401 in response to the button tap operation. In this case, the displayed user interface does not include the shortcut bar 401.

In some embodiments, the shortcut bar 401 may include a close control. A touch operation is performed on the close control, for example, a tap operation is performed on the close control, and the electronic device closes the shortcut bar 401 in response to the tap operation.

In an implementation, after the shortcut bar 401 is opened, the shortcut bar 401 may be set to be automatically closed or hidden after an operation is stopped for a period of time. For example, after the user performs a last operation on the shortcut bar 401, if no operation is performed within 10 seconds, the electronic device may automatically close the shortcut bar 401. Then, when the shortcut bar 401 needs to be used, the shortcut bar 401 is opened by performing a button operation on the first button. In this way, the shortcut bar 401 is automatically closed or hidden when the shortcut bar 401 is not used, and other content displayed on the display of the electronic device may not be blocked. In addition, an area size and a display location of the shortcut bar 401 displayed on the user interface are not limited either.

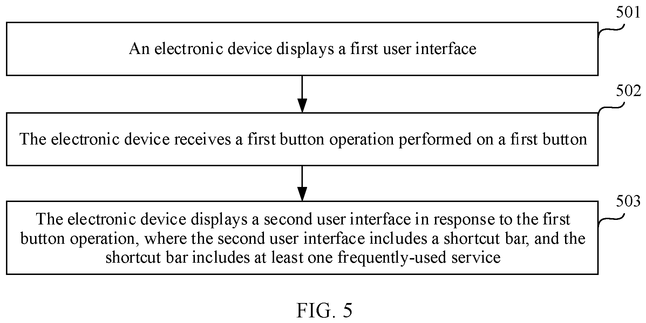

FIG. 5 shows an example of a procedure of a response method for an electronic device according to an embodiment of this application. The method is performed by the electronic device, and the electronic device has a display and a first button.

Step 501: The electronic device displays a first user interface.

Herein, the first user interface may be a home screen, for example, the home screen 300 shown in FIG. 3. Alternatively, the first user interface may be an application interface of a first application, and a function corresponding to a customized button operation is not set for the first application.

Step 502: The electronic device receives a first button operation performed on a first button.

The first button operation includes but is not limited to any one of the following operations: a button tap operation, a button press and hold operation, a button double-tap operation, a button triple-tap operation, and a button combination operation. The button combination operation includes a combination operation on at least two physical buttons in a power button, a volume up button, a volume down button, and the first button.

In this embodiment of this application, the button tap operation performed on the first button may be an operation of tapping the first button once; the button press and hold operation performed on the first button may be an operation of pressing and holding the first button; the button double-tap operation performed on the first button may be understood as an operation of tapping the first button twice consecutively, and duration between the two taps is less than preset duration; and the button triple-tap operation performed on the first button may be understood as an operation of tapping the first button three times consecutively, and duration between two adjacent taps in the three taps is less than preset duration.

Step 503: The electronic device displays a second user interface in response to the first button operation, where the second user interface includes a shortcut bar, and the shortcut bar includes at least one frequently-used service.

For example, the first user interface is the home screen 300 shown in FIG. 3, and the first button is the button tap operation in the foregoing example. The second user interface may be the user interface shown in FIG. 4A.

In this embodiment of this application, when a user needs to use a frequently-used service, the user performs the first button operation, for example, the button tap operation, on the first button, to quickly invoke the shortcut bar, so that the user can quickly find these frequently-used services when the user needs to use the frequently-used service. This can meet different function requirements of the user in various scenarios, thereby improving user experience in human-machine interaction.

In some embodiments, the shortcut bar includes a first service, and the first service is, for example, the weather broadcast service in the shortcut bar 401 shown in FIG. 4A. The electronic device may further receive a first operation performed on the first service, where the first operation is, for example, a press and hold operation; and then display a deletion control in response to the first operation. The deletion control is, for example, the deletion control 408 shown in FIG. 4D. Then, the electronic device receives a second operation performed on the deletion control, where the second operation is, for example, a tap operation; and then deletes the first service from the shortcut bar in response to the second operation. In this way, the user can delete one or more services from the shortcut bar based on a requirement. For example, a service that the user considers to be infrequently used in a subsequent use process can be deleted from the shortcut bar.

In some embodiments, the shortcut bar includes a management control. The method further includes: The electronic device receives a third operation performed on the management control, where the management control is, for example, the management control 403 shown in FIG. 4A, and the third operation is, for example, a tap operation, and then displays a service list in response to the third operation, where the service list includes at least one service, and the service list is the service list 404 shown in FIG. 4B; and the electronic device receives a fourth operation performed on the first service, where the first service is any one of the at least one service, and the first service is, for example, the translation service shown in FIG. 4B, and then adds the first service to the shortcut bar in response to the fourth operation. In this case, the shortcut bar includes the translation service. In this way, the user can add a service to the shortcut bar based on a requirement. For example, a service that the user considers to be frequently used and that has not been added to the shortcut bar can be added to the shortcut bar through a user operation.

In some embodiments, the electronic device may further receive a second button operation performed on the first button, where the second button operation is, for example, a button tap operation performed on the first button, and then close the shortcut bar in response to the second button operation. For example, when displaying the shortcut bar 401 in FIG. 4C, FIG. 4D, or FIG. 4E, the electronic device receives the button tap operation on the first button, closes the shortcut bar 401, and displays the home screen 300 shown in FIG. 3. In this way, the user can quickly close the shortcut bar when the user does not need to use the shortcut bar.

In some embodiments, the shortcut bar includes a close control, and the method further includes: The electronic device receives a touch operation performed on the close control, and then closes the shortcut bar in response to the touch operation. In this way, the user can quickly close the shortcut bar when the user does not need to use the shortcut bar.

In some embodiments, different functions that can be implemented by different button operations in different scenarios may be set for the first button. When receiving a button operation, the electronic device may determine, based on a current application scenario and a specific type of the button operation, a function corresponding to the button operation, and perform the function. For example, in an application scenario 1, the electronic device may implement a function 1 after receiving the first button operation; in the application scenario 1, the electronic device may implement a function 2 after receiving the second button operation; and in an application scenario 2, the electronic device may implement a function 3 after receiving the first button operation.

With reference to the accompanying drawings, the following describes in detail functions corresponding to button operations in different scenarios.

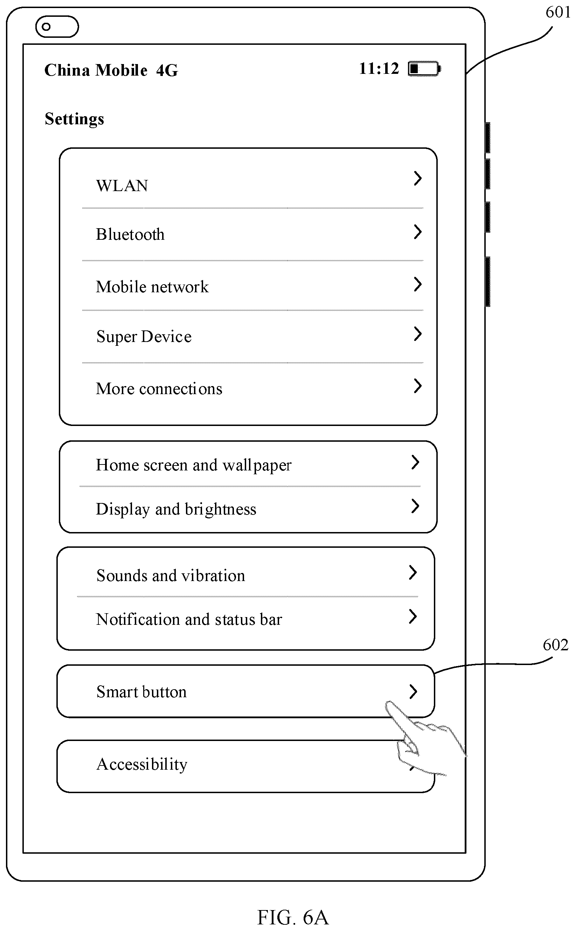

For example, the electronic device displays the home screen 300 shown in FIG. 3, where the home screen 300 includes an icon of a Settings application. When the electronic device receives a user operation, for example, a tap operation, performed on the icon of the Settings application, the electronic device displays, in response to the tap operation, an interface 601 of the Settings application shown in FIG. 6A. The interface 601 of the Settings application may include a plurality of setting options, including but not limited to WLAN, Bluetooth, Mobile network, Super Device, More connections, Home screen and wallpaper, Display and brightness, Sound and vibration, Notification and status bar, a smart button 602, Accessibility, and the like.

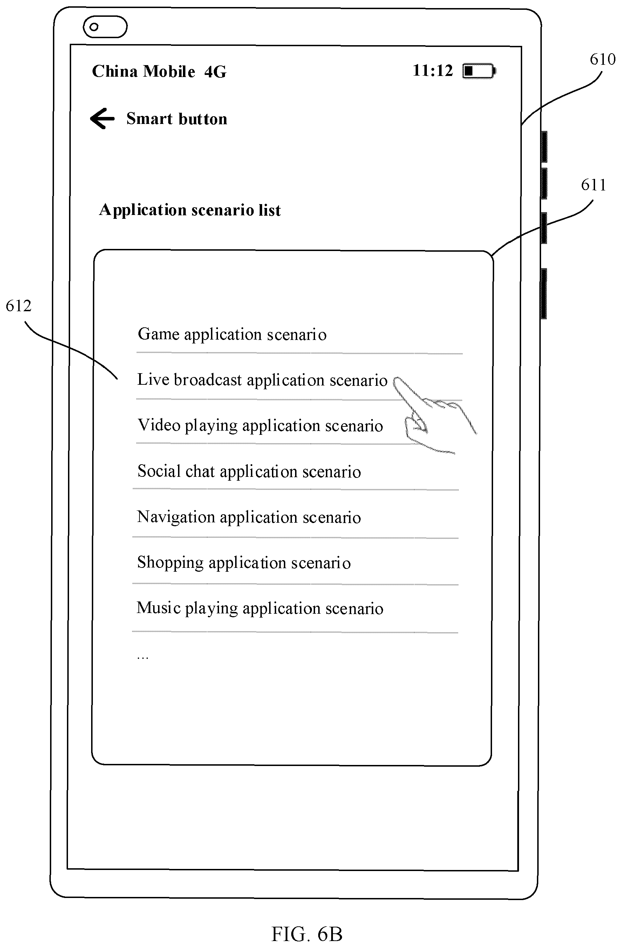

When the electronic device receives an operation performed on the smart button 602 shown in FIG. 6A, for example, the operation is a tap operation, the electronic device displays a user interface 610 in FIG. 6B in response to the tap operation, where the user interface 610 includes an application scenario list 611. The application scenario list 611 includes at least one application scenario, for example, includes but is not limited to a game application scenario, a live broadcast application scenario, a video playing application scenario, a social chat application scenario, a navigation application scenario, a shopping application scenario, a music playing application scenario, and the like. The user may set functions corresponding to different button operations for each application scenario.

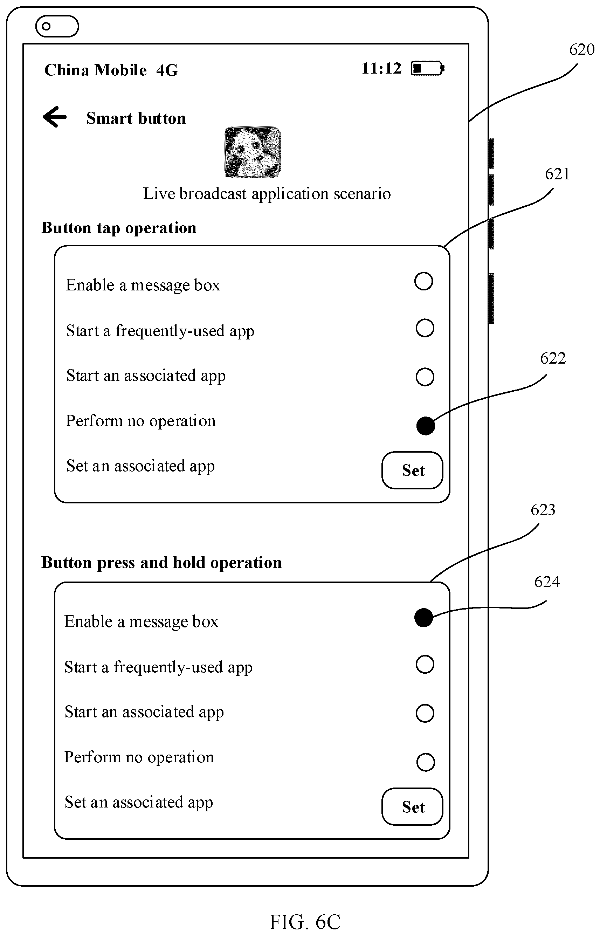

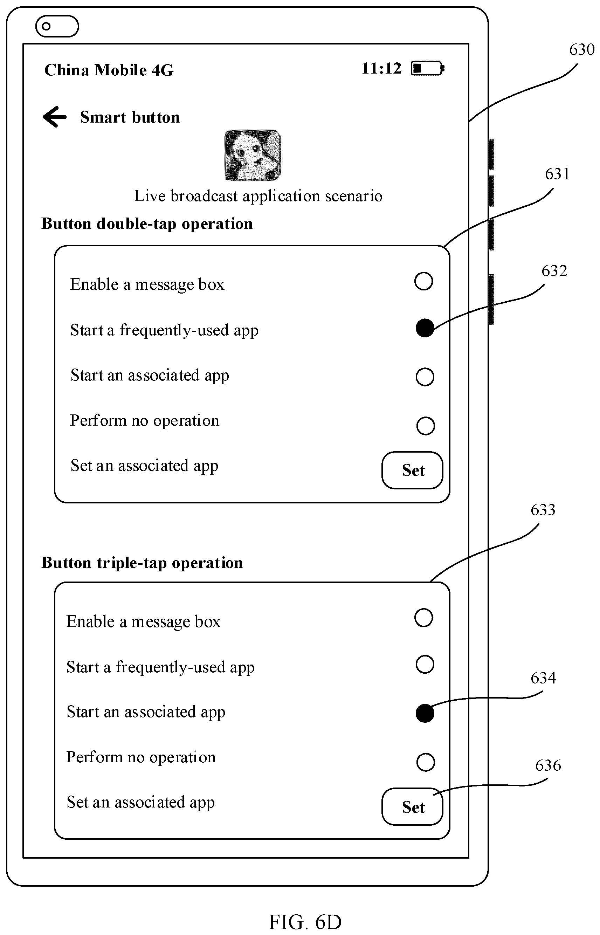

For example, the live broadcast application scenario 612 shown in FIG. 6B is to be set. When the electronic device receives an operation, for example, a tap operation, performed on the live broadcast application scenario 612, the electronic device displays, in response to the tap operation, a user interface 620 shown in FIG. 6C. The user interface 620 may include at least one button operation and a function option list corresponding to each button operation. As shown in FIG. 6C, the user interface 620 includes a button tap operation and a function option list 621 corresponding to the button tap operation, and the user interface 620 further includes a button press and hold operation and a function option list 623 corresponding to the button press and hold operation. As shown in FIG. 6D, a user interface 630 includes a button double-tap operation and a function option list 631 corresponding to the button double-tap operation, and the user interface 630 further includes a button triple-tap operation and a function option list 633 corresponding to the button triple-tap operation. Any one of the function option list 621, the function option list 623, the function option list 631, and the function option list 633 may include at least one selectable function and a selection control corresponding to each function. The at least one selectable function may include but is not limited to functions such as enabling a message box, starting a frequently-used app, starting an associated app, performing no operation, and setting an associated app.

The user may select at least one function from a corresponding function option list for different button operations. The following describes, with reference to FIG. 6C and FIG. 6D by using the live broadcast application scenario as an example, in detail cases in which the electronic device receives different button operations in the live broadcast application scenario and sets corresponding functions.

Case 1: Set a function for a button tap operation.

For example, the user sets the function "Perform no operation" for the button tap operation. As shown in FIG. 6C, the electronic device displays the button tap operation and the function option list 621. The electronic device receives a touch operation performed on a selection control 622, for example, the touch operation is a tap operation, and the electronic device selects the function "Perform no operation" in response to the touch operation performed on the selection control 622. In this case, as shown in FIG. 6C, the selection control 622 corresponding to the function "Perform no operation" is in a selected state, and selection controls respectively corresponding to the functions such as "Enable a message box", "Start a frequently-used application (app)", and "Start an associated app" are all in an unselected state. After the function "Perform no operation" is set for the button tap operation, when the user is performing TikTok live broadcast by using the electronic device, the electronic device displays an application interface of a TikTok live broadcast application. In this case, the user performs the button tap operation on the first button. The electronic device receives the button tap operation performed on the first button 307, and the electronic device performs no operation.

Case 2: Set a function for a button press and hold operation.

For example, the user sets the function "Enable a message box" for the button press and hold operation. As shown in FIG. 6C, the electronic device displays the button press and hold operation and the function option list 623. The electronic device receives a touch operation performed on a selection control 624, for example, the touch operation is a tap operation, and the electronic device selects the function "Enable a message box" in response to the tap operation performed on the selection control 624. In this case, as shown in FIG. 6C, the selection control 624 corresponding to the function "Enable a message box" is in a selected state, and selection controls respectively corresponding to the functions such as "Start a frequently-used application (app)", "Start an associated app", and "Perform no operation" are all in an unselected state. After the function "Enable a message box" is set for the button press and hold operation, the user receives a WeChat message when being performing TikTok live broadcast by using the electronic device. In this case, the user does not need to tap a message notification on a screen, and may perform the function "Enable a message box" by performing the button press and hold operation on the first button 307. In this way, a WeChat chat interface is displayed.

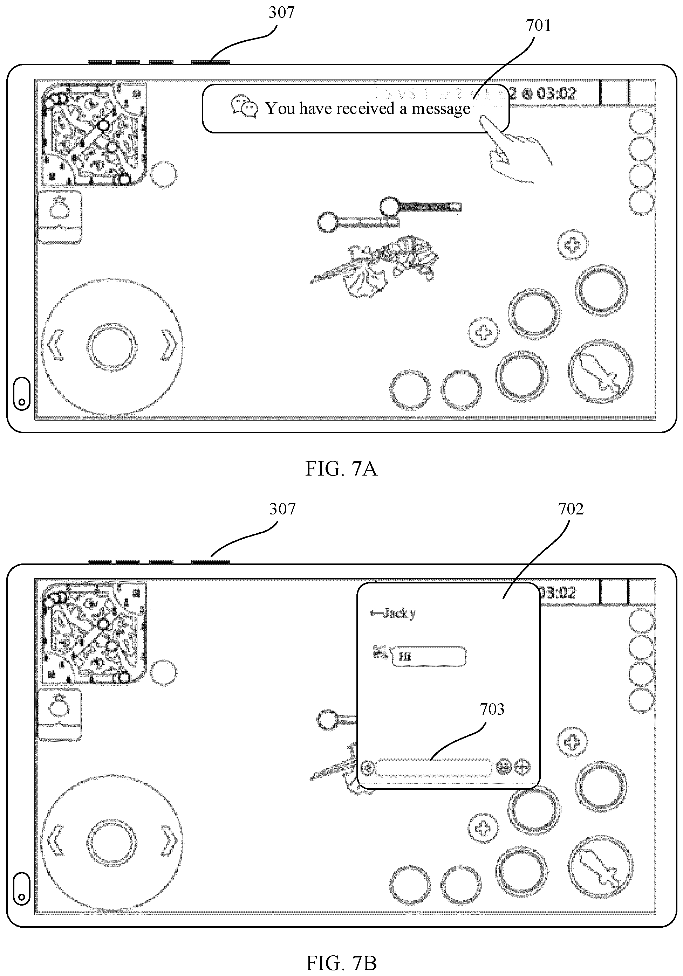

This setting manner may also be applicable to another scenario. For example, the function "Enable a message box" is also set for the button press and hold operation in the game application scenario. When the user is playing a game by using the electronic device, the electronic device displays a game interface shown in FIG. 7A. In this case, a notification message 701 is received, where the notification message 701 is displayed on the game interface in a floating mode. In this case, it is inconvenient for the user to directly tap the notification message 701 on the screen, and the user may directly perform the button press and hold operation on the first button 307. The electronic device receives the button press and hold operation performed on the first button 307, performs the function "Enable a message box", and displays a message box 702 shown in FIG. 7B. The message box 702 includes a message sent by Jacky, and the message box 702 may further include an input box 703. Then, the user may input a text in the input box 703 to reply to the message sent by Jacky. The message box 702 may further include a voice control, and the user may tap the voice control to reply to the message sent by Jacky. If the electronic device continuously receives a plurality of notification messages, when the electronic device receives the button press and hold operation performed on the first button 307, the electronic device starts, in response to the button press and hold operation, a message box corresponding to a latest notification message. In some other examples, the electronic device displays a message list in response to the button press and hold operation, and the user selects a message that needs to be replied to.

In some embodiments, the electronic device may alternatively enable a voice reply function in response to the button press and hold operation performed on the first button 307, and then perform voice reply. In this way, user operations can be simplified, and a message can be replied more conveniently.

Case 3: Set a function for a button double-tap operation.

For example, the user sets the function "Start a frequently-used app" for the button double-tap operation. As shown in FIG. 6D, the electronic device displays the button double-tap operation and the function option list 631. The electronic device receives a touch operation performed on a selection control 632, for example, the touch operation is a tap operation, and the electronic device selects the function "Start a frequently-used app" in response to the touch operation performed on the selection control 632. In this case, as shown in FIG. 6D, the selection control 632 corresponding to the function "Start a frequently-used app" is in a selected state, and selection controls respectively corresponding to the functions such as "Enable a message box", "Start an associated app", and "Perform no operation" are all in an unselected state. After the function "Start a frequently-used app" is set for the button double-tap operation, when the user is performing TikTok live broadcast by using the electronic device, the electronic device displays an application interface of a TikTok live broadcast application. In this case, the user performs the button double-tap operation on the first button, and the electronic device performs the function "Start a frequently-used app" in response to the button double-tap operation performed on the first button 307.

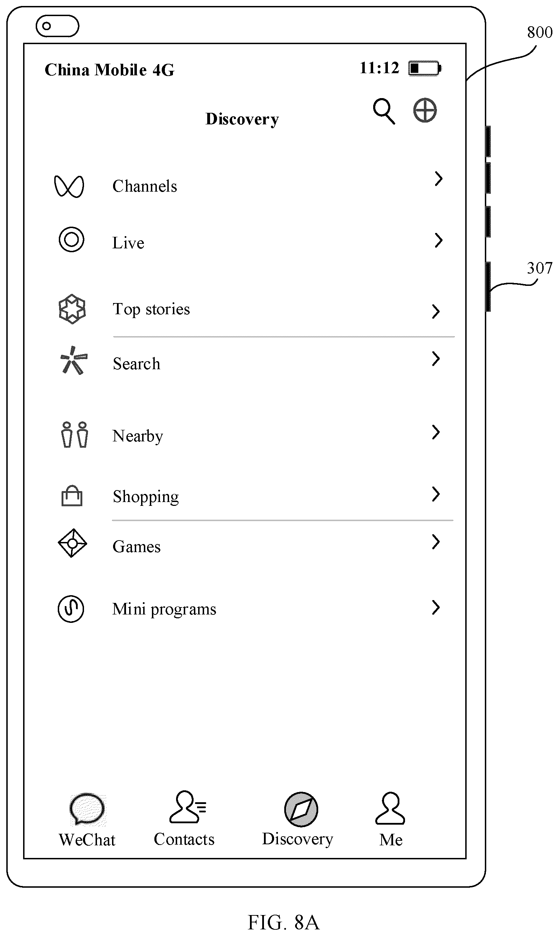

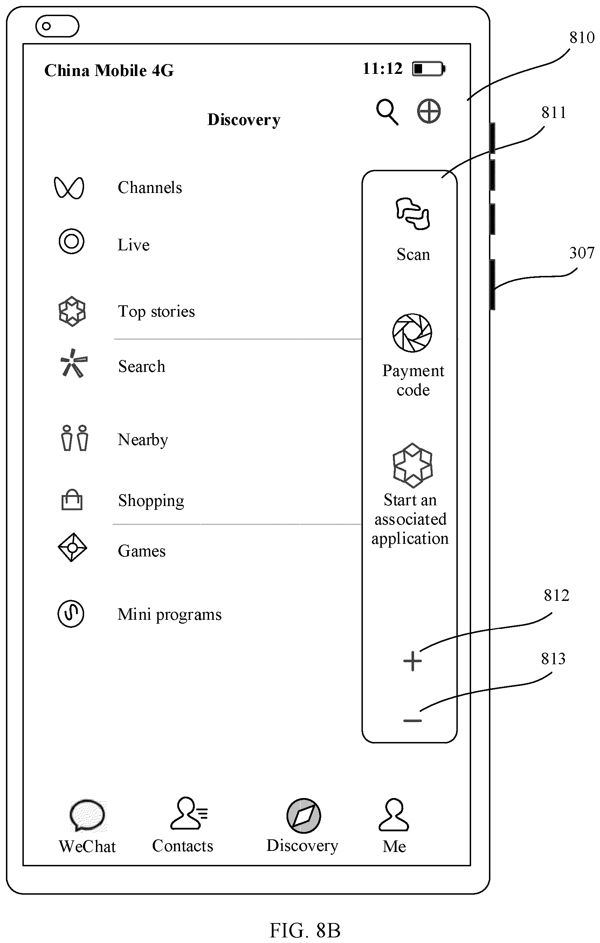

This setting manner may also be applicable to another scenario. For example, the function "Start a frequently-used app" is also set for the button double-tap operation in the social chat application scenario. When the user is using a WeChat application, the electronic device displays a user interface 800 shown in FIG. 8A. When the electronic device receives a button operation performed on the first button 307, for example, the button operation is the button double-tap operation, the electronic device displays, in response to the button double-tap operation, a user interface 810 shown in FIG. 8B. The user interface 810 includes a side frame 811, where the side frame 811 may include a frequently-used application of a WeChat application. The frequently-used application may include but is not limited to Scan, Payment code, Start an associated application, and the like shown in FIG. 8B. It should be understood that, when the electronic device displays any application interface of the WeChat application, in the social chat application scenario, the electronic device may invoke the side frame 811 by performing the button double-tap operation on the first button 307, to quickly find these frequently-used applications.

Optionally, as shown in FIG. 8B, the side frame 811 may further include an add control 812. When the electronic device receives a touch operation performed on the add control 812, for example, the touch operation is a tap operation, the electronic device displays a function option list (not shown in FIG. 8B) in response to the tap operation. The function option list may include at least one application, and the user may select the at least one application from the function option list and add the at least one application to the side frame 811. As shown in FIG. 8B, the side frame 811 may further include a deletion control 813. The electronic device may delete some functions from the side frame 811 in response to a user operation, for example, a tap operation, performed on the deletion control 813. In some other embodiments, when an application (for example, a scan function) on the side frame 811 needs to be deleted, a press and hold operation may alternatively be performed on the scan function on the side frame 811. In this case, the electronic device displays the deletion control in response to the press and hold operation, and then the electronic device may delete the scan function from the side frame 811 in response to the tap operation performed on the deletion control.

Case 4: Set a function for a button triple-tap operation.

For example, the user sets the function "Start an associated app" for the button triple-tap operation. As shown in FIG. 6D, the electronic device displays the button triple-tap operation and the function option list 633. The electronic device receives a touch operation performed on a selection control 634, for example, the touch operation is a tap operation, and the electronic device selects the function "Start an associated app" in response to the touch operation performed on the selection control 634. In this case, as shown in FIG. 6D, the selection control 634 corresponding to the function "Start an associated app" is in a selected state, and selection controls respectively corresponding to the functions such as "Enable a message box", "Start a frequently-used app", and "Perform no operation" are all in an unselected state. After the function "Start an associated app" is set for the button triple-tap operation, when the user is performing TikTok live broadcast by using the electronic device, the electronic device displays an application interface of a TikTok live broadcast application. In this case, the user performs the button triple-tap operation on the first button, and the electronic device performs the function "Start an associated app" in response to the button triple-tap operation.

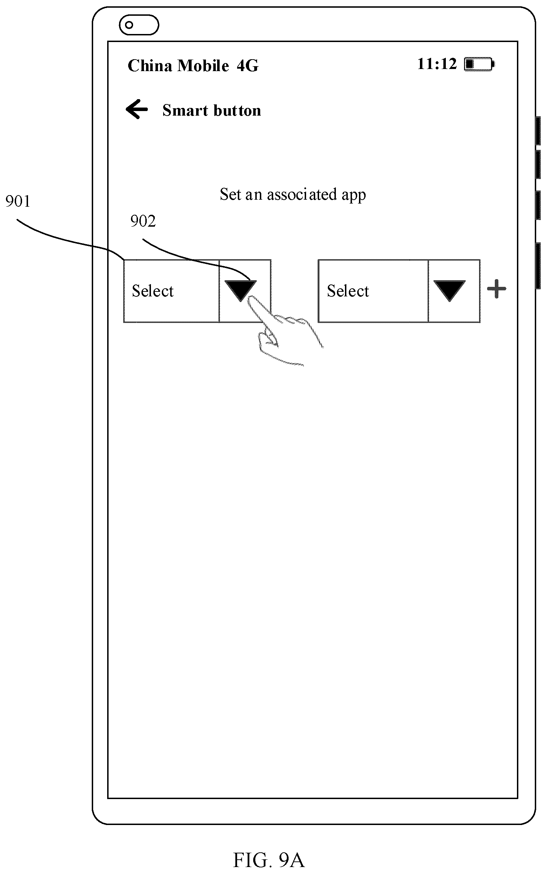

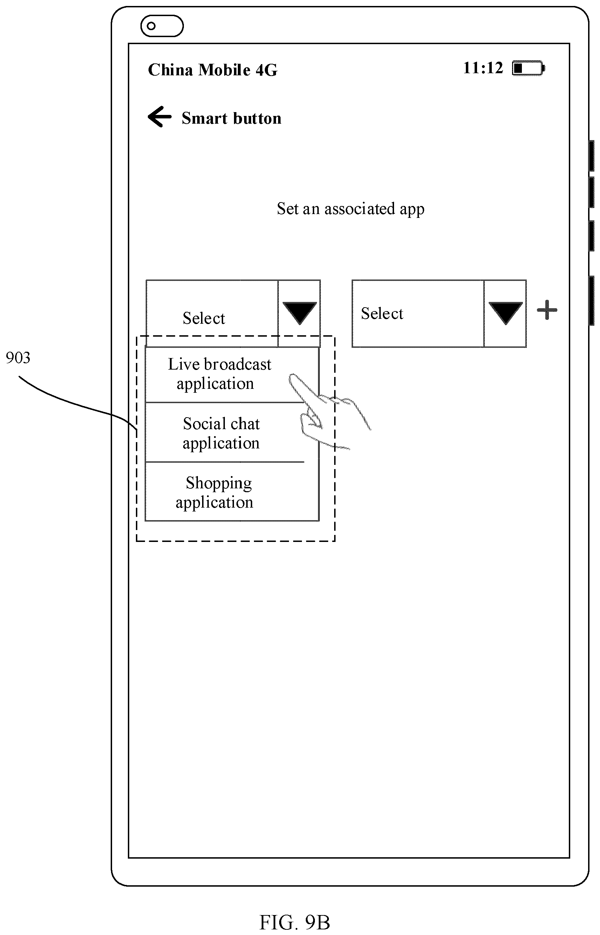

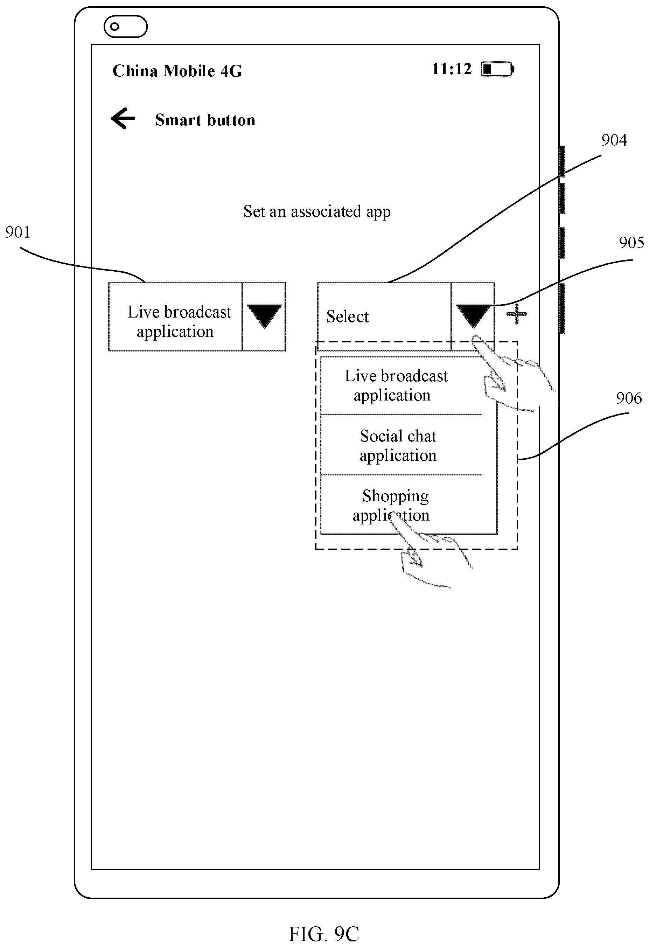

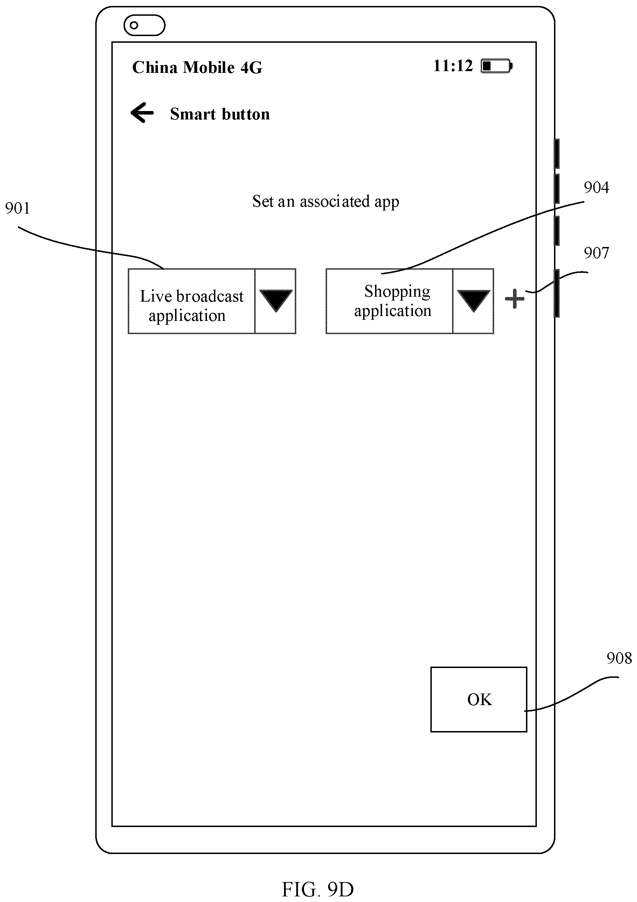

As shown in FIG. 6D, the function option list 633 may further include a setting control 636. The user may perform a touch operation on the setting control 636, and the electronic device displays, in response to the touch operation, an interface for setting an associated app shown in FIG. 9A. The interface for setting the associated app includes an input box 901 for selecting an application scenario and an input box 902 for selecting the associated application. As shown in FIG. 9A, in response to a touch operation, for example, a tap operation, performed on a control 902 in the input box 901, the electronic device may display a drop-down menu 903 shown in FIG. 9B. The drop-down menu 903 includes a live broadcast application, a social chat application, and a shopping application. The electronic device displays the live broadcast application in the input box 901 in response to a tap operation performed on the live broadcast application in the drop-down menu 903. Similarly, in response to a touch operation, for example, a tap operation, performed on a control 905 in the input box 904, the electronic device may display a drop-down menu 906 shown in FIG. 9C. The drop-down menu 906 includes a live broadcast application, a social chat application, and a shopping application. As shown in FIG. 9D, the electronic device displays the shopping application in the input box 904 in response to a tap operation performed on the shopping application in the drop-down menu 906. In this way, a group of associated apps, namely, the live broadcast application and the shopping application, may be obtained. If the associated app is no longer set, an OK control 908 shown in FIG. 9D may be tapped, to complete setting of the associated app and return to a previous interface.

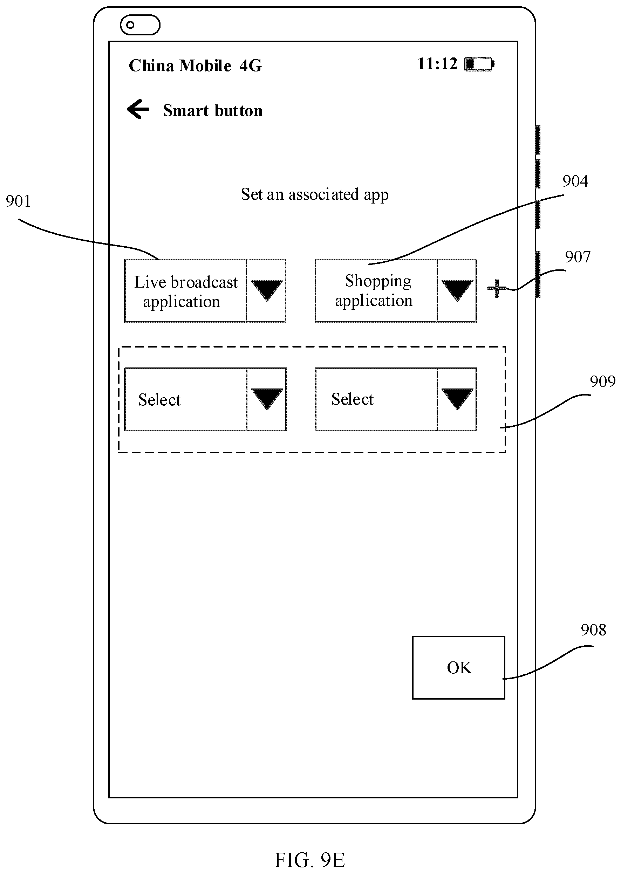

After the group of associated apps are set, a next group of associated apps may continue to be set. A control 907 shown in FIG. 9D may be tapped to add a group of selection boxes. In response to a tap operation performed on the control 907, the electronic device displays a group of selection boxes 909 shown in FIG. 9E. For a process of setting an associated app in the selection box 909, refer to the process in FIG. 9A to FIG. 9D. Details are not described herein again.

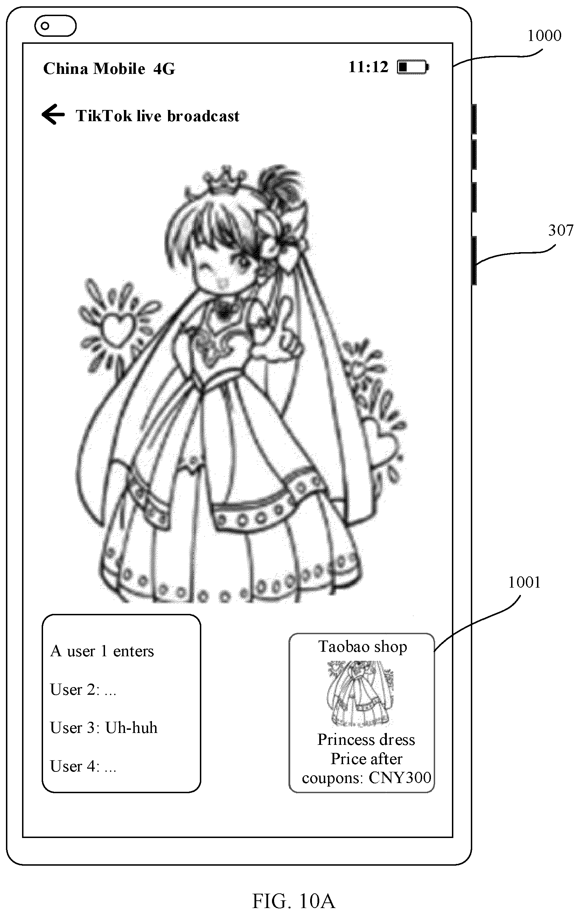

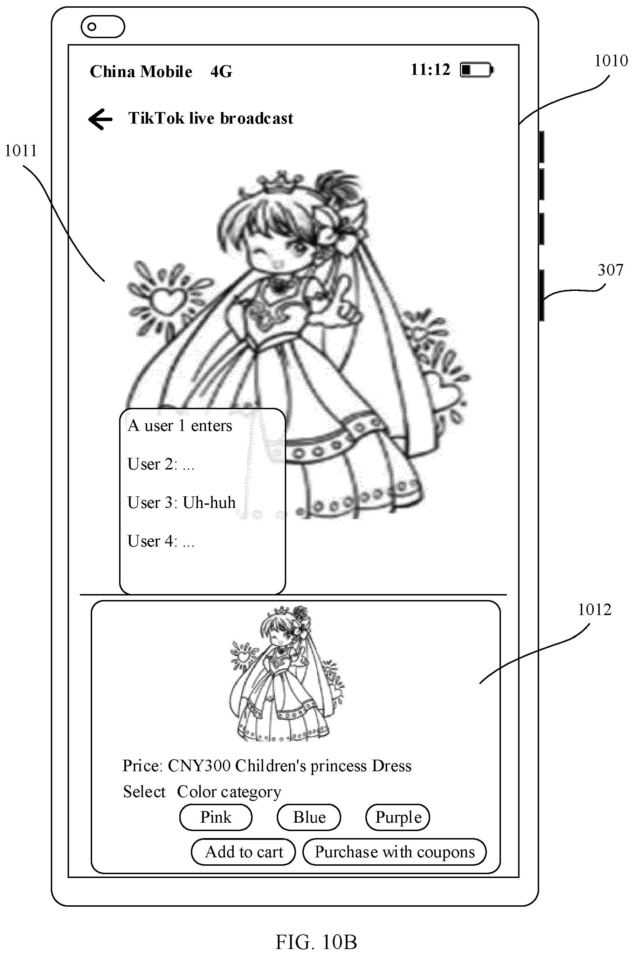

A live broadcast application scenario is used as an example. The electronic device displays a TikTok live broadcast interface 1000 shown in FIG. 10A, where the TikTok live broadcast interface 1000 includes a commodity link 1001 that is being explained by a live streamer. The user may directly perform a button triple-tap operation on the first button 307, and in response to the button triple-tap operation, the electronic device displays a user interface 1010 shown in FIG. 10B. The user interface 1010 includes a TikTok live broadcast interface 1011 and a shopping application interface 1012 that are displayed in a split-screen mode. In this way, the user can directly start a shopping application by performing the button triple-tap operation on the first button, and can browse commodity details in the shopping application without affecting watching of a live broadcast.

Embodiments of this application are applicable to some other scenarios, such as a split-screen display scenario, a floating-window display scenario, and an inner-screen display scenario.

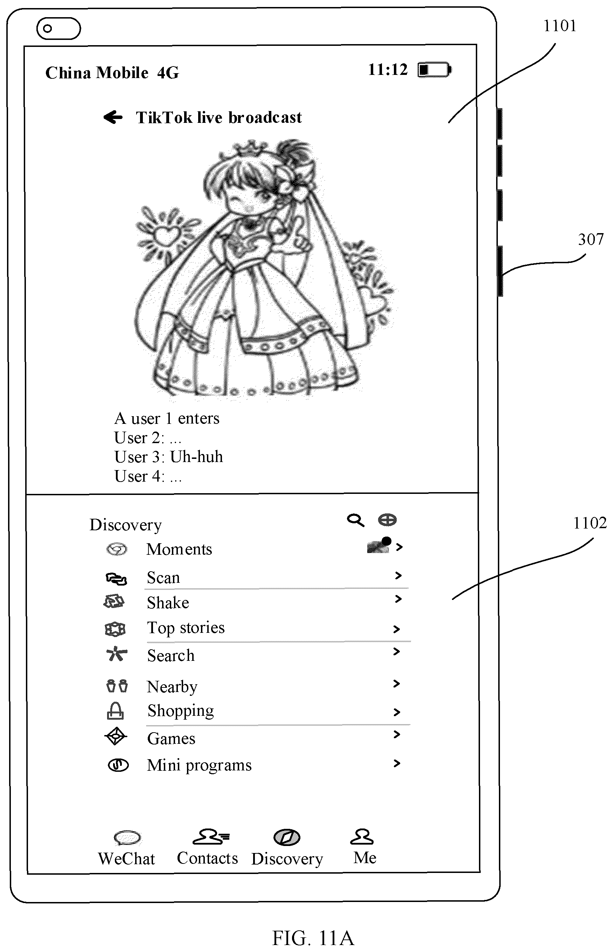

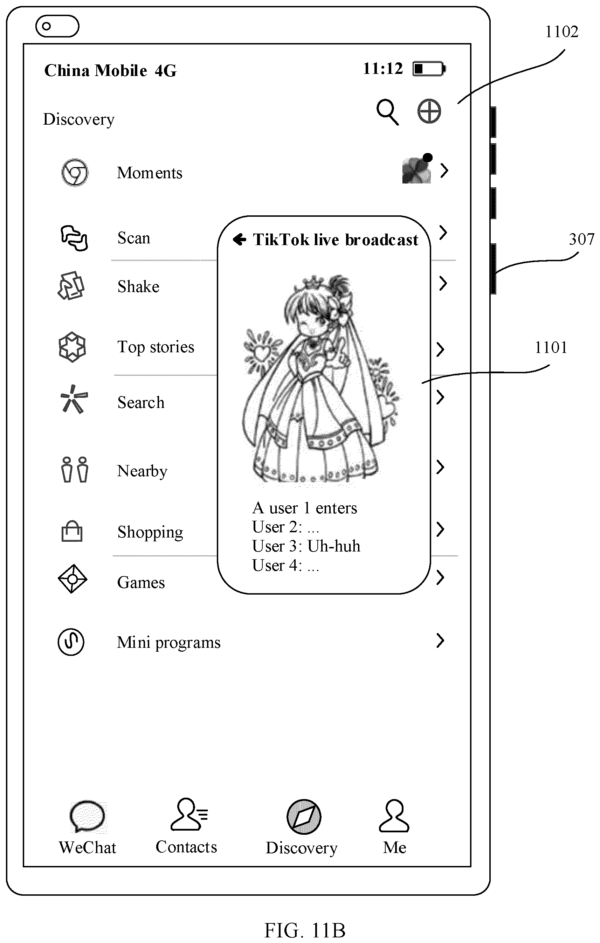

With reference to FIG. 11A and FIG. 11B, the following describes a specific implementation of a function that is of switching to floating-window display and that corresponds to the split-screen display scenario.

In some embodiments, the electronic device displays an application interface of an application 1 and an application interface of an application 2 in a split-screen mode. In this scenario, an operation may be performed on the first button, and then a display mode is switched to a floating-window display mode.

For example, the application 1 is a TikTok live broadcast application, and the application 2 is a WeChat application. As shown in FIG. 11A, a TikTok live broadcast interface 1101 is displayed on an upper half screen of the electronic device, and a WeChat interface 1102 is displayed on a lower half screen of the electronic device. An operation may be performed on the first button 307 to perform the function of switching to floating-window display. After the function is performed, as shown in FIG. 11B, the WeChat interface 1102 is displayed on the display in a full-screen mode, and the TikTok live broadcast interface 1101 is displayed in a floating window.

It should be understood that, in the foregoing example, alternatively, after the function of switching to floating-window display is performed, the TikTok live broadcast interface 1101 may be displayed on the display in the full-screen mode, and the WeChat interface 1102 may be displayed in the floating window. This is not limited in this application.

With reference to FIG. 11A and FIG. 11B again, the following describes a specific implementation of switching to a split-screen display mode corresponding to the floating-window display scenario.

In some embodiments, the electronic device displays an application interface of an application 1 in a floating window, and displays an application interface of an application 2 in a full-screen mode. In this scenario, an operation may be performed on the first button, and then a display mode is switched to the split-screen display mode.

For example, the application 1 is a TikTok live broadcast application, and the application 2 is a WeChat application. As shown in FIG. 11B, the electronic device displays a TikTok live broadcast interface 1101 in the floating window, and displays a WeChat interface 1102 on the display in the full-screen mode. An operation may be performed on the first button 307 to perform a function of switching to split-screen display. After the function is performed, as shown in FIG. 11A, the TikTok live broadcast interface 1101 is displayed on an upper half screen of the electronic device, and the WeChat interface 1102 is displayed on a lower half screen of the electronic device.

It should be understood that, in the foregoing example, alternatively, after the split-screen display function is performed, the WeChat interface 1102 may be displayed on the upper half screen of the electronic device, and the TikTok live broadcast interface 1101 may be displayed on the lower half screen of the electronic device. This is not limited in this application.

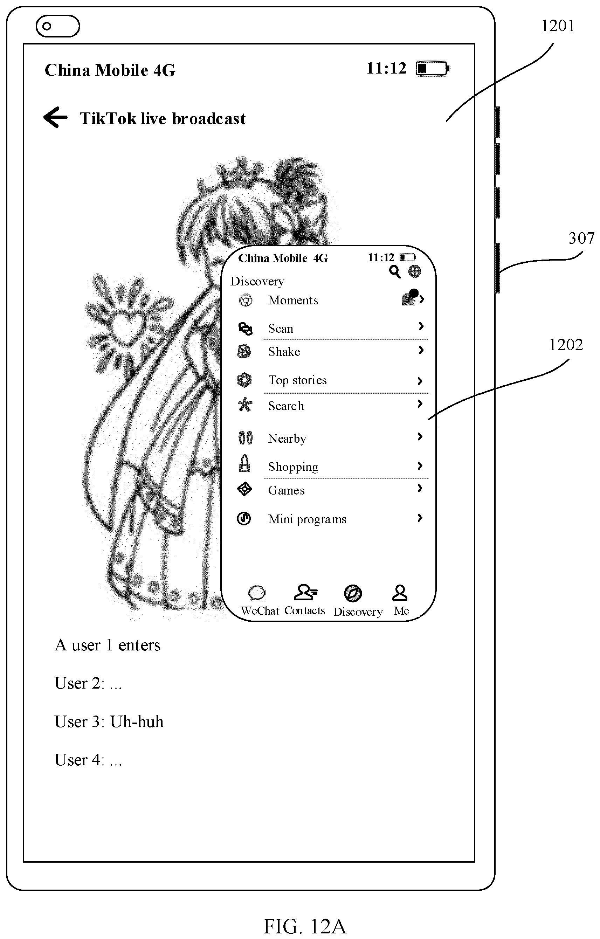

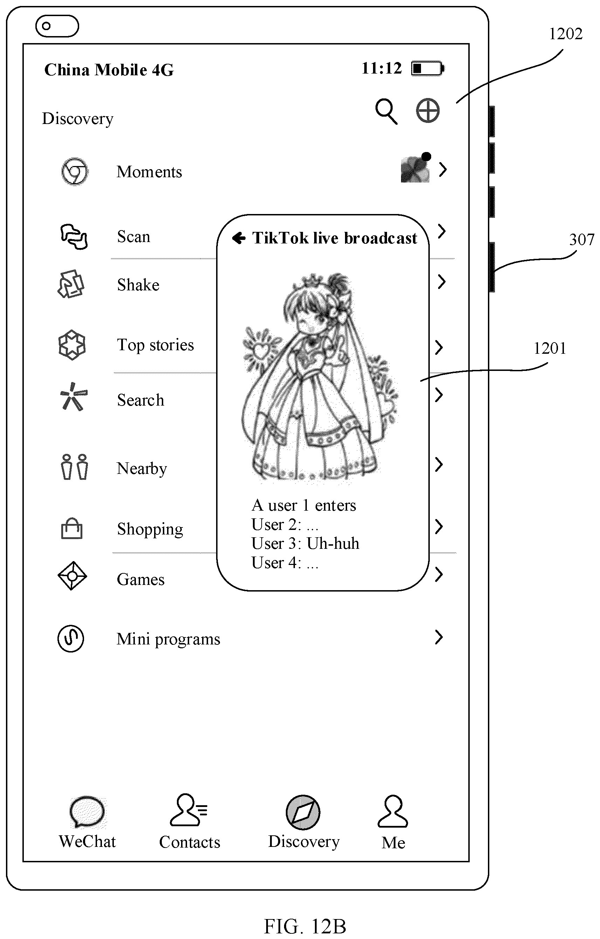

With reference to FIG. 12A and FIG. 12B, the following describes a specific implementation of a function that is of switching to an inter-application display mode and that corresponds to the floating-window display scenario.

In some embodiments, the electronic device displays both an application interface of an application 1 and an application interface of an application 2, displays the application interface of the application 1 in a full-screen mode, and displays the application interface of the application 2 on the application interface of the application 1 in a floating-window mode. In this scenario, an operation may be performed on the first button, and then display modes of the two applications are switched.

For example, the application 1 is a TikTok live broadcast application, and the application 2 is a WeChat application. As shown in FIG. 12A, the electronic device displays a TikTok live broadcast interface 1201 in the full-screen mode, and displays a WeChat interface 1202 on the TikTok live broadcast interface 1201 in the floating-window mode. If the user needs to switch between display modes of the two applications to enable the TikTok live broadcast interface 1201 to be displayed in the floating-window mode and the WeChat interface 1202 to be displayed in the full-screen mode, the user may perform a button operation, for example, a button combination operation, performed on the first button 307. The button combination operation is, for example, simultaneously pressing and holding the volume up button and the first button 307. In response to the button combination operation, the electronic device displays a user interface shown in FIG. 12B, that is, displays the WeChat interface 1202 in the full-screen mode, and displays the TikTok live broadcast interface 1201 in a floating window.

It should be understood that the example of switching between the display modes of the two applications is also applicable to a scenario in which the application 1 and the application 2 are displayed in a split-screen mode. For example, the display of the electronic device is divided into an upper half screen and a lower half screen. When the TikTok live broadcast interface is displayed on the upper half screen of the display, and the WeChat interface is displayed on the lower half screen, the user may perform the button combination operation on the first button 307, for example, simultaneously press and hold the volume down button and the first button 307. In response to the button combination operation, the electronic device performs a function of switching between the user interfaces displayed on the upper half screen and the lower half screen. After the function is performed, the WeChat interface is displayed on the upper half screen of the display, and the TikTok live broadcast interface is displayed on the lower half screen. It should be understood that the example is also applicable to a switching scenario in which different application interfaces are displayed on the left and right half screens in the split-screen mode, and may also be applicable to a switching scenario in which different application interfaces are displayed on two screens in a foldable display.

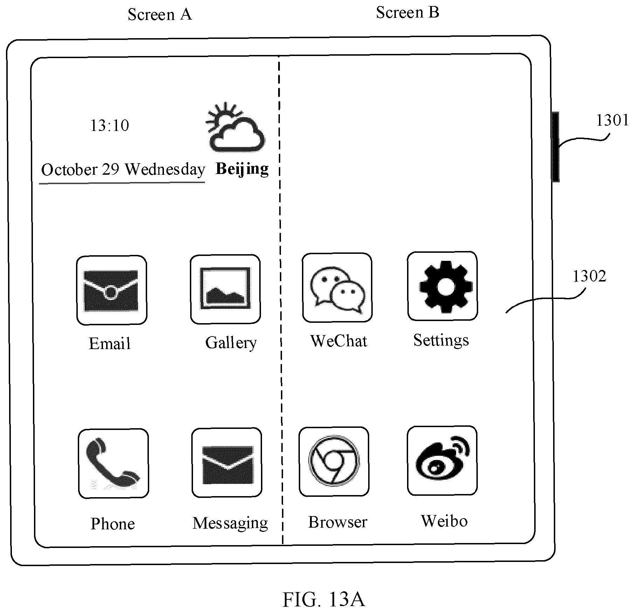

The following describes a specific implementation of a full-screen display scenario of the foldable display with reference to FIG. 13A to FIG. 13D.

As shown in FIG. 13A, the electronic device includes a first button 1301. When the electronic device is in an unfolded state, a user interface 1302 is displayed in a full-screen mode. The user interface 1302 includes a plurality of elements. The elements may be one or more of the following: icons of a plurality of applications, a home screen widget, a large folder, a status bar, a page indicator, a wallpaper picture, and the like. For example, the user interface 1302 shown in FIG. 13A includes an icon of an Email application, an icon of a Gallery application, an icon of a WeChat application, an icon of a Settings application, an icon of a Phone application, an icon of a Messaging application, an icon of a Browser application, an icon of a Weibo application, and the like. The home screen widget may include a date widget (for example, October 29, Wednesday), a time widget (for example, 13: 10), and a weather widget (for example, Beijing, 10°C).

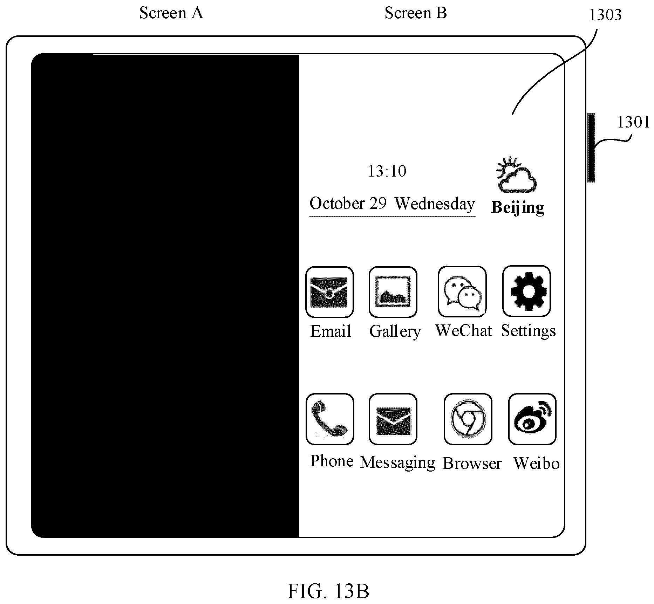

When the electronic device displays the user interface 1302 shown in FIG. 13A in the full-screen mode, the electronic device receives a button operation, for example, a button double-tap operation, performed on the first button 1301, and the electronic device controls the elements displayed on a screen A and a screen B to translate in a second direction, and also controls the wallpaper picture to translate in the second direction. In this case, the electronic device displays, on a left side of the screen A, a black area shown in FIG. 13B, and displays, on the screen B, a user interface 1303 shown in FIG. 13B. The user interface 1303 includes all the elements on the user interface 1302. A difference lies in that sizes of and spacings between the elements on the user interface 1303 are reduced.

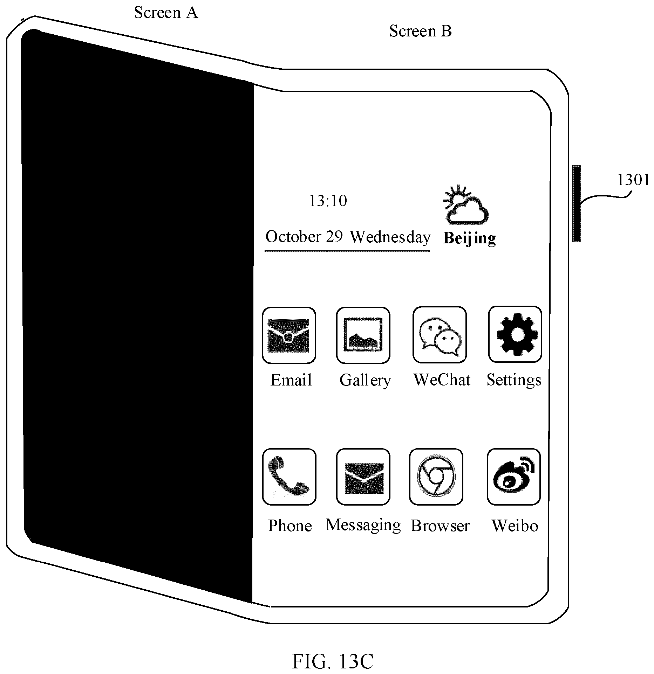

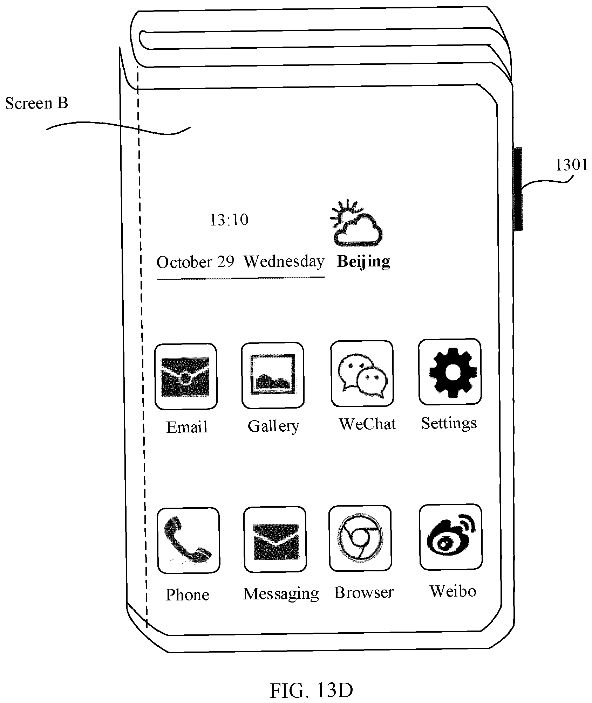

Then, as shown in FIG. 13C, the screen A and the screen B of an outward foldable display start to be folded in a direction opposite to each other through a user operation, until the electronic device presents a fully-folded state shown in FIG. 13D under an action of the user operation, so that the user may view, on the screen B, all the elements on the user interface 1302 before the screens are folded.

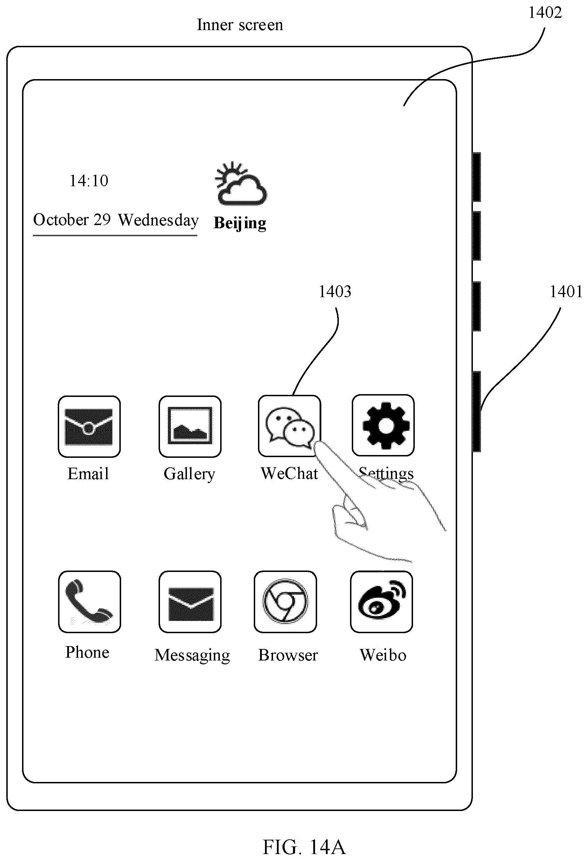

The following describes a specific implementation of an inner-screen display scenario of the foldable display with reference to FIG. 14A to FIG. 14C.

As shown in FIG. 14A, the electronic device includes a first button 1401. When the electronic device is in an unfolded state, a user interface 1402 is displayed in a full-screen mode. The user interface 1402 includes a plurality of elements. The elements may be one or more of the following: icons of a plurality of applications, a home screen widget, a large folder, a status bar, a page indicator, a wallpaper picture, and the like. For example, the user interface 1402 shown in FIG. 14A includes an icon of an Email application, an icon of a Gallery application, an icon 1403 of a WeChat application, an icon of a Settings application, an icon of a Phone application, an icon of a Messaging application, an icon of a Browser application, an icon of a Weibo application, and the like. The home screen widget may include a date widget (for example, October 29, Wednesday), a time widget (for example, 14: 10), and a weather widget (for example, Beijing, 10°C).

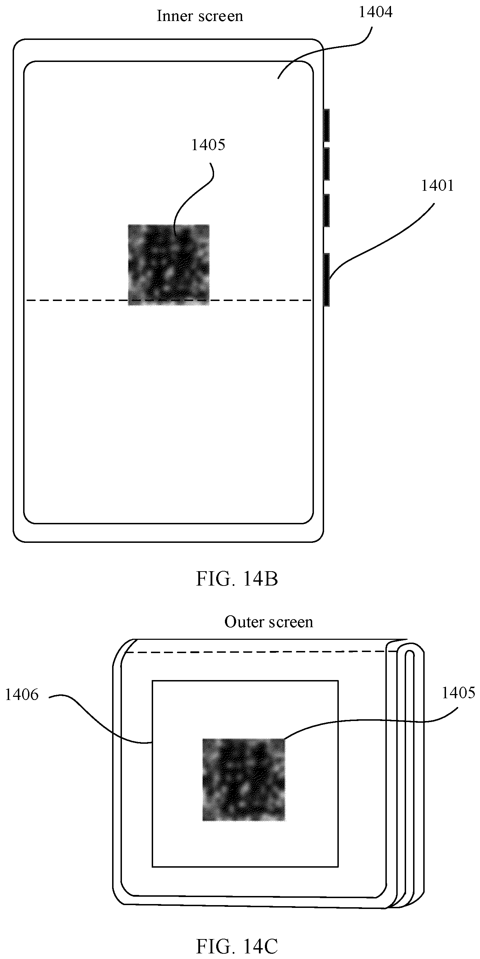

The electronic device receives a user operation, for example, a tap operation, performed on the WeChat icon 1403 shown in FIG. 14A, and the electronic device starts the WeChat application in response to the tap operation. Then, a user interface 1404 shown in FIG. 14B is displayed after payment code of the WeChat application is started through a series of user operations. The user interface 1404 includes the payment code 1405. The electronic device receives a button operation, for example, a button double-tap operation, performed on the first button 1401, so that the payment code 1405 slides upward until the payment code 1405 slides from an upper edge of an inner screen to an outer screen, and a user interface 1406 shown in FIG. 14C is displayed on the outer screen. The user interface 1406 includes the payment code 1405. In this way, when the foldable display is folded for use, the user may also view the payment code 1404 on the outer screen.

In this embodiment of this application, an example in which the payment code is pushed to the outer screen for display through the button operation is used for description, or an application in the electronic device may be pushed to the outer screen for display through the button operation, or content in any application may be pushed to the outer screen for display, where the content herein may be a text, a picture, a link, or the like. This is not limited in this application. In addition, in this example, a scenario in which the display is divided into a foldable display including an upper screen and a lower screen through a folding axis, and content on the inner screen is pushed to the outer screen is used as an example for description. It should be understood that this example is applicable to a scenario in which the display is divided into a foldable screen including a left screen and a right screen through a folding axis, and content on the inner screen is pushed to the outer screen. In this way, it is more convenient for the user to view a required application or other content in the application.

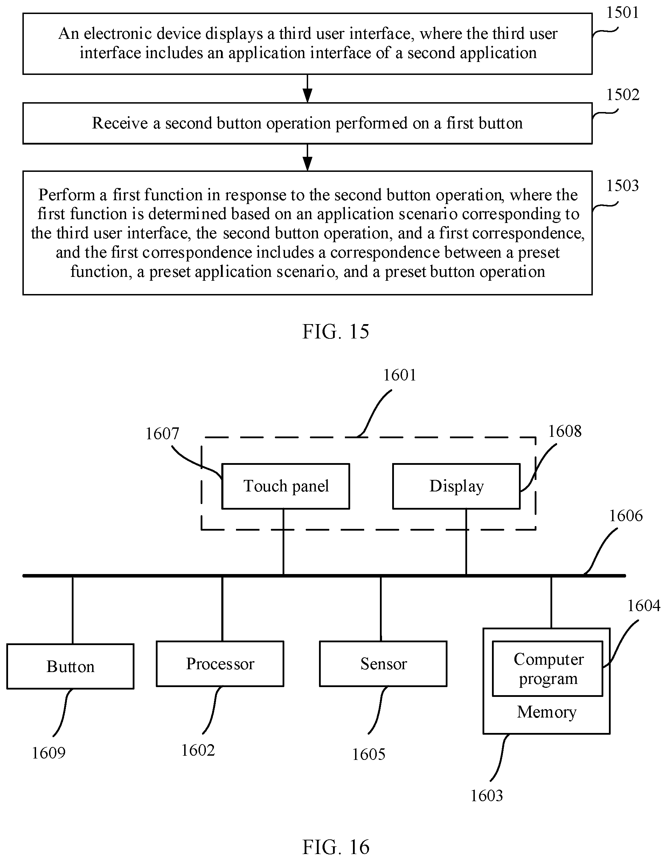

FIG. 15 shows an example of a procedure of a response method for an electronic device according to an embodiment of this application. The method is performed by the electronic device, and the electronic device has a display and a first button.

Step 1501: The electronic device displays a third user interface, where the third user interface includes an application interface of a second application.

Step 1502: Receive a second button operation performed on the first button.

The second button operation includes but is not limited to any one of the following operations: a button tap operation, a button press and hold operation, a button double-tap operation, a button triple-tap operation, and a button combination operation. The button combination operation includes a combination operation on at least two physical buttons in a power button, a volume up button, a volume down button, and the first button.

Step 1503: Perform a first function in response to the second button operation. The first function may be determined based on an application scenario corresponding to the third user interface, the second button operation, and a first correspondence. The first correspondence includes a correspondence between a preset function, a preset application scenario, and a preset button operation.

In this embodiment of this application, after receiving the second button operation, the electronic device determines, in response to the second button operation, the application scenario corresponding to the third user interface. For example, if the second application is a chess and card application, the application scenario corresponding to the third user interface is a game application scenario; or if the second application is a TikTok live broadcast application, the application scenario corresponding to the third user interface is a live broadcast application scenario; or if the second application is a Taobao application, a Jingdong application, or Suning e-commerce, the application scenario corresponding to the third user interface is a shopping application scenario; or if the second application is a Youku video player, an iQIYI video player, or a Huawei video player, the application scenario corresponding to the third user interface is a video playing application scenario; or if the second application is WeChat, Messaging, DingTalk, or Lark, the application scenario corresponding to the third user interface is a social chat application scenario; or if the second application is Amap or Baidu Maps, the application scenario corresponding to the third user interface is a navigation application scenario; or if the second application is Kugou Music or Huawei Music, the application scenario corresponding to the third user interface is a music playing application scenario.

After determining the application scenario corresponding to the third user interface, the electronic device may determine, based on the application scenario corresponding to the third user interface, the second button operation, and the first correspondence, a function corresponding to the application scenario corresponding to the third user interface and the second button operation, namely, the first function. This can meet different function requirements of a user in various scenarios, thereby improving user experience in human-machine interaction.

For example, the first correspondence includes a correspondence between a function "Enable a message box", and a live broadcast application scenario and a button press and hold operation. For example, the application scenario corresponding to the third user interface is the live broadcast application scenario, and the second button operation is the button press and hold operation in FIG. 6C. In this case, it may be determined that the first function is the function "Enable a message box".

For example, the first correspondence includes a correspondence between a function "Enable a message box", and a game application scenario and a button press and hold operation. For example, the third user interface is the interface of the game application shown in FIG. 7A, and the second button operation is the button press and hold operation. In this case, the application scenario corresponding to the third user interface is the game application scenario, and then it may be determined that the first function is the function "Enable a message box".

For example, the first correspondence includes a correspondence between a function "Start a frequently-used app", a live broadcast application scenario, and a button double-tap operation. For example, the application scenario corresponding to the third user interface is the live broadcast application scenario, and the second button operation is the button double-tap operation in FIG. 6D. In this case, the first function is the function "Start a frequently-used app".

For example, the first correspondence includes a correspondence between a function "Start a frequently-used app", a social chat application scenario, and a button double-tap operation. For example, the second application is a WeChat application, and the second button operation is the button double-tap operation. In this case, the application scenario corresponding to the third user interface is the social chat application scenario, and the first function is the function "Start a frequently-used app".

For example, the first correspondence includes a correspondence between a function "Start an associated app", a live broadcast application scenario, and a button triple-tap operation. For example, the application scenario corresponding to the third user interface is the live broadcast application scenario, and the second button operation is the button triple-tap operation in FIG. 6D. In this case, the first function is, for example, the function "Start an associated app".

Before step 1502, the user may customize functions corresponding to different button operations in each application scenario. For example, a setting manner may include the following process.

S1: The electronic device may display a fourth user interface, where the fourth user interface includes a button function setting option.

For example, the fourth user interface is the interface 601 of the Settings application in FIG. 6A, and the button function setting option is the smart button 602 in FIG. 6A.

S2: The electronic device receives a fifth operation performed on the button function setting option.

For example, the fifth operation is a tap operation.

S3: The electronic device displays an application scenario list in response to the fifth operation, where the application scenario list includes at least one application scenario.

For example, the application scenario list is the application scenario list 611 shown in FIG. 6B.

S4: The electronic device receives a sixth operation performed on a first preset application scenario, where the first preset application scenario is any application scenario in the application scenario list.

For example, the first preset application scenario is the live broadcast application scenario 612 shown in FIG. 6B.

S6: The electronic device displays a fifth user interface in response to the sixth operation, where the fifth user interface includes at least one preset button operation and a function option list corresponding to each preset button operation, and the function option list includes at least one preset function.

For example, the sixth operation is a tap operation.

For example, the fifth user interface is the user interface 620 shown in FIG. 6C, and includes a button tap operation, the function option list 621 corresponding to the button tap operation, a button press and hold operation, and the function option list 623 corresponding to the button press and hold operation.

For another example, the fifth user interface is the user interface 630 shown in FIG. 6D, and includes a button double-tap operation, the function option list 631 corresponding to the button double-tap operation, a button triple-tap operation, and the function option list 633 corresponding to the button triple-tap operation.

S6: The electronic device receives a seventh operation performed on a first preset function, where the first preset function is any preset function in a function option list corresponding to a first preset button operation.

S7: The electronic device completes setting of a correspondence between the first preset function, the first preset application scenario, and the first preset button operation in response to the seventh operation.

For example, the first preset application scenario is the live broadcast application scenario 612 shown in FIG. 6B, and the fifth user interface is the user interface 620 shown in FIG. 6C. The first preset function is the function option "Enable a message box" in the function option list 623 corresponding to the button press and hold operation, and the seventh operation is a tap operation performed on the function option "Enable a message box", or the first operation may be a tap operation performed on the selection control 624 corresponding to the function option "Enable a message box". Then, the electronic device may complete setting of the live broadcast application scenario, the button press and hold operation, and the function "Enable a message box" in response to the tap operation.

For example, the first preset application scenario is the live broadcast application scenario 612 shown in FIG. 6B, and the fifth user interface is the user interface 630 shown in FIG. 6D. The first preset function is the function "Start a frequently-used app" in the function option list 631 corresponding to the button double-tap operation shown in FIG. 6D, and the seventh operation is a tap operation performed on the function option "Start a frequently-used app", or the first operation may be a tap operation performed on the selection control 632 corresponding to the function option "Start a frequently-used app". Then, the electronic device may generate a correspondence between the function "Start a frequently-used app", and the live broadcast application scenario and the button double-tap operation in response to the tap operation.

For example, the first preset application scenario is the live broadcast application scenario 612 shown in FIG. 6B, and the fifth user interface is the user interface 630 shown in FIG. 6D. The first preset function is the function "Start an associated app" in the function option list 633 corresponding to the button triple-tap operation, and the seventh operation is a tap operation performed on the function option "Start an associated app", or the first operation may be a tap operation performed on the selection control 634 corresponding to the function option "Start an associated app". Then, the electronic device may generate a correspondence between the function "associated app", and the live broadcast application scenario and the button triple-tap operation in response to the tap operation.

Step 1503 may be implemented in a plurality of manners.

In some implementations, the first correspondence includes a correspondence between the function of enabling a message bar, a first application scenario, and the second button operation. The electronic device may further receive a notification message, where the notification message is displayed on a first user interface in a floating mode. Then, the electronic device receives the second button operation performed on the first button, determines, in response to the second button operation, that the third user interface corresponds to the first application scenario, and determines, based on the first application scenario, the second button operation, and the first correspondence, the function that is of enabling the message bar and that corresponds to the first application scenario and the second button operation, namely, the first function. Further, the electronic device performs the function of enabling a message bar, and displays, in a floating mode after performing the function, the message bar corresponding to the notification message.

For example, the first application scenario is a game application scenario. For another example, the first application scenario is a video playing scenario. For another example, the first application scenario is a live broadcast application scenario. In this implementation, when it is inconvenient for the user to enable, by performing a touch operation, the message bar in a display area in which the notification message is located, the user may directly view the notification message by performing a button operation.

In some implementations, the first correspondence includes a correspondence between a function of starting a frequently-used application, a second application scenario, and the second button operation. In response to the second button operation, the electronic device determines that the third user interface corresponds to the second application scenario, and determines, based on the second application scenario, the second button operation, and the first correspondence, the function that is of starting the frequently-used application and that corresponds to the second application scenario and the second button operation, namely, the first function. Then, the electronic device performs the function of starting a frequently-used application, and displays a sidebar in a floating mode after performing the function, where the sidebar includes at least one frequently-used application. In this way, the user can quickly find the frequently-used application.

For example, the second application scenario is a live broadcast application scenario. For another example, the second application scenario is a social chat application scenario.

In some implementations, the first correspondence includes a correspondence between a function of starting an associated application, a third application scenario, and the second button operation. In response to the second button operation, the electronic device determines that the third user interface corresponds to the third application scenario. Then, the electronic device performs the function that is of starting the frequently-used application and that corresponds to the second application scenario and the second button operation, and displays a sixth user interface after performing the function. The sixth user interface includes at least a third application associated with the third application scenario. Optionally, the sixth user interface may further include the application interface of the second application. For example, the third application scenario may include but is not limited to a game application scenario, a live broadcast application scenario, a video playing application scenario, a social chat application scenario, a shopping application scenario, a navigation application scenario, or the like. In this way, the user can quickly view an application interface of the associated application when the user needs to view the associated application.

In some implementations, the first correspondence includes a correspondence between a function of switching to floating-window display, a split-screen display scenario, and the second button operation. In addition to the application interface of the second application, the third user interface in step 1501 further includes an application interface of the third application. In addition, the application interface of the second application and the application interface of the third application are displayed on the display of the electronic device in a split-screen mode. In response to the second button operation, the electronic device may determine that the third user interface corresponds to the split-screen display scenario; and perform the function that is of switching to floating-window display and that corresponds to the split-screen display scenario and the second button operation, and after performing the function, display the application interface of the second application on the display in a full-screen mode, and display the application interface of the third application in a floating window.

For example, the second application is a WeChat application, and the third application is a TikTok live broadcast application. As shown in FIG. 11A, the application interface 1101 of the TikTok live broadcast application and the application interface 1102 of the WeChat application are displayed on the display in the split-screen mode. After the electronic device performs the function of switching to floating-window display, as shown in FIG. 11B, the application interface 1102 of the WeChat application is displayed on the display in the full-screen mode, and the application interface 1101 of the TikTok live broadcast application is displayed in the floating window. In this way, switching can be conveniently performed through a button operation when the user needs to switch from split-screen display to floating-window display.

In some implementations, the first correspondence includes a correspondence between a function of switching to split-screen display, a floating-window display scenario, and the second button operation. In addition to the application interface of the second application, the third user interface in step 1501 further includes an application interface of the third application. In addition, the application interface of the second application is displayed on the display in a full-screen mode, and the application interface of the third application is displayed in a floating window. In response to the second button operation, the electronic device determines that the third user interface corresponds to the floating-window display scenario; and performs the function that is of switching to split-screen display and that corresponds to the floating-window display scenario and the second button operation, and displays the application interface of the second application and the application interface of the third application on the display in a split-screen mode after performing the function.

For example, the second application is a WeChat application, and the third application is a TikTok live broadcast application. As shown in FIG. 11B, the application interface 1102 of the WeChat application is displayed on the display in the full-screen mode, and the application interface 1101 of the TikTok live broadcast application is displayed in the floating window. After the electronic device performs the function of switching to split-screen display, as shown in FIG. 11A, the application interface 1101 of the TikTok live broadcast application and the application interface 1102 of the WeChat application are displayed on the display in the split-screen mode. In this way, switching can be conveniently performed through a button operation when the user needs to switch from floating-window display to split-screen display.

In some implementations, the first correspondence includes a correspondence between a function of switching an inter-application display mode, a floating-window display scenario, and the second button operation. In addition to the application interface of the second application, the third user interface in step 1501 further includes an application interface of the third application. In addition, the application interface of the second application is displayed on the display in a full-screen mode, and the application interface of the third application is displayed in a floating window. In response to the second button operation, the electronic device determines that the third user interface corresponds to the floating-window display scenario; and performs the function that is of switching the inter-application display mode and that corresponds to the floating-window display scenario and the second button operation, and after performing the function, displays the application interface of the second application in the floating window, and displays the application interface of the third application on the display in the full-screen mode.

For example, the second application is a TikTok live broadcast application, and the third application is a WeChat application. As shown in FIG. 12A, the application interface 1201 of the TikTok live broadcast application is displayed on the display in a full-screen mode, and the application interface 1202 of the WeChat application is displayed in a floating window. After the electronic device performs the function of switching the inter-application display mode, as shown in FIG. 12B, the application interface 1202 of the WeChat application is displayed on the display in the full-screen mode, and the application interface 1201 of the TikTok live broadcast application is displayed in the floating window. In this way, switching can be conveniently performed through a button operation when the user needs to switch between an application interface displayed in the floating window and an application interface displayed in the full-screen mode.

In some implementations, the electronic device includes an inner screen and an outer screen, and the first correspondence includes a correspondence between a function of pushing content from the inner screen to the outer screen, an inner-screen display scenario, and the second button operation. The third user interface in step 1501 is displayed on the inner screen of the electronic device, and the third user interface includes first content. In response to the second button operation, the electronic device may determine that the third user interface corresponds to an outer-screen display scenario, and display the first content on the outer screen.

For example, the third user interface, for example, the user interface 1404 shown in FIG. 14B, is displayed on the inner screen, and the first content is the payment code 1405. After the electronic device performs the function of pushing content from the inner screen to the outer screen, as shown in FIG. 14C, the payment code 1405 is displayed on the outer screen. The first content is pushed, through a button operation, to the outer screen that is convenient for viewing, so that it is more convenient for the user to view the first content.

In the foregoing embodiments provided in this application, the methods provided in embodiments of this application are described from a perspective of the electronic device serving as an execution body. To implement functions in the foregoing methods provided in embodiments of this application, the electronic device may include a hardware structure and/or a software module, and the foregoing functions are implemented by using a hardware structure, a software module, or a combination of a hardware structure and a software module. Whether a function in the foregoing functions is performed by using the hardware structure, the software module, or the combination of the hardware structure and the software module depends on particular applications and design constraints of the technical solutions.

When hardware is used for implementation, for a hardware implementation of the electronic device, refer to FIG. 1 and related descriptions thereof.

As shown in FIG. 16, an electronic device 100 includes: a touchscreen 1601, where the touchscreen 1601 includes a touch panel 1607 and a display 1608; one or more processors 1602; a memory 1603; one or more applications (not shown); one or more computer programs 1604; and a sensor 1605. The foregoing components may be connected through one or more communication buses 1606. The one or more computer programs 1604 are stored in the memory 1603, and are configured to be executed by the one or more processors 1602. The one or more computer programs 1604 include instructions, and the instructions may be used to perform the method in any one of the foregoing embodiments.

An embodiment of this application further provides a computer storage medium. The computer storage medium stores computer instructions, and when the computer instructions are run on an electronic device, the electronic device is enabled to perform the foregoing related method steps to implement the methods in the foregoing embodiments.

An embodiment of this application further provides a computer program product. When the computer program product runs on a computer, the computer is enabled to perform the foregoing related steps to implement the methods in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the chip to perform the translation methods in the foregoing method embodiments.

The electronic device, the computer storage medium, the computer program product, or the chip provided in embodiments of this application is configured to perform the corresponding methods provided above. Therefore, for beneficial effects that can be achieved, refer to the beneficial effects of the corresponding methods provided above. Details are not described herein again.

The foregoing descriptions about implementations allow a person skilled in the art to understand that, for a purpose of convenient and brief description, division of the foregoing functional modules is taken as an example for illustration. During actual application, the foregoing functions may be allocated to different functional modules for implementation based on a requirement. In other words, an inner structure of an apparatus is divided into different functional modules to implement all or some of the functions described above.

In the several embodiments provided in this application, it should be understood that the disclosed apparatus and methods may be implemented in other manners. For example, the described apparatus embodiment is merely an example. For example, the module or unit division is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of software functional unit.

When the integrated unit is implemented in the form of software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of software product. The software product is stored in a storage medium and includes several instructions for instructing a device (which may be a single-chip microcomputer, a chip, or the like) or a processor (processor) to perform all or some of the steps of the methods in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing content is merely specific implementations of this application, but is not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A response method for an electronic device, applied to an electronic device having a display and a first button, wherein the method comprises:
displaying a first user interface;
receiving a first button operation performed on the first button; and
performing a first function or displaying a second user interface in response to the first button operation, wherein the second user interface comprises a shortcut bar, and the shortcut bar comprises at least one frequently-used service.

2. The method according to claim 1, wherein the first user interface comprises a home screen or an application interface of a first application, and a function corresponding to a customized button operation is not set for the first application.

3. The method according to claim 2, wherein the shortcut bar comprises a first service, and the method further comprises:
receiving a first operation performed on the first service;
displaying a deletion control in response to the first operation;
receiving a second operation performed on the deletion control; and
deleting the first service from the shortcut bar in response to the second operation.

4. The method according to any one of claims 1 to 3, wherein the shortcut bar comprises a management control, and the method further comprises:
receiving a third operation performed on the management control;
displaying a service list in response to the third operation, wherein the service list comprises at least one service;
receiving a fourth operation performed on the first service, wherein the first service is any one of the at least one service; and
adding the first service to the shortcut bar in response to the fourth operation.

5. The method according to any one of claims 1 to 4, wherein the method further comprises:
receiving a second button operation performed on the first button; and
closing the shortcut bar in response to the second button operation.

6. The method according to any one of claims 1 to 4, wherein the shortcut bar comprises a close control, and the method further comprises:
receiving a touch operation performed on the close control; and
closing the shortcut bar in response to the touch operation.

7. The method according to any one of claims 1 to 6, wherein the first button operation comprises any one of the following operations:
a button tap operation; a button press and hold operation; a button double-tap operation; a button triple-tap operation; a button combination operation, wherein
the button combination operation comprises a combination operation on at least two physical buttons in a power button, a volume up button, a volume down button, and the first button.

8. A response method for an electronic device, applied to an electronic device having a display and a first button, wherein the method comprises:
displaying a third user interface, wherein the third user interface comprises an application interface of a second application;
receiving a second button operation performed on the first button; and
performing a first function in response to the second button operation, wherein the first function is determined based on an application scenario corresponding to the third user interface, the second button operation, and a first correspondence, and the first correspondence comprises a correspondence between a preset function, a preset application scenario, and a preset button operation.

9. The method according to claim 8, wherein before receiving the second button operation performed on the first button, the method further comprises:
displaying a fourth user interface, wherein the fourth user interface comprises a button function setting option;
receiving a fifth operation performed on the button function setting option;
displaying an application scenario list in response to the fifth operation, wherein the application scenario list comprises at least one application scenario;
receiving a sixth operation performed on a first preset application scenario, wherein the first preset application scenario is any application scenario in the application scenario list;
displaying a fifth user interface in response to the sixth operation, wherein the fifth user interface comprises at least one preset button operation and a function option list corresponding to each preset button operation, and the function option list comprises at least one preset function;
receiving a seventh operation performed on a first preset function, wherein the first preset function is any preset function in a function option list corresponding to a first preset button operation; and
completing setting of a correspondence between the first preset function, the first preset application scenario, and the first preset button operation in response to the seventh operation.

10. The method according to claim 8 or 9, wherein the first correspondence comprises a correspondence between a function of enabling a message bar, a first application scenario, and the second button operation;
before receiving the second button operation performed on the first button, the method further comprises:
receiving a notification message, wherein the notification message is displayed on the first user interface in a floating mode; and
performing the first function in response to the second button operation comprises:
in response to the second button operation, determining that the third user interface corresponds to the first application scenario; and
performing the function that is of enabling the message bar and that corresponds to the first application scenario and the second button operation, and displaying, in the floating mode after performing the function, the message bar corresponding to the notification message.

11. The method according to claim 8 or 9, wherein the first correspondence comprises a correspondence between a function of starting a frequently-used application, a second application scenario, and the second button operation; and
performing the first function in response to the second button operation comprises:
in response to the second button operation, determining that the third user interface corresponds to the second application scenario; and
performing the function that is of starting the frequently-used application and that corresponds to the second application scenario and the second button operation, and displaying a sidebar in a floating mode after performing the function, wherein the sidebar comprises at least one frequently-used application.

12. The method according to claim 8 or 9, wherein the first correspondence comprises a correspondence between a function of starting an associated application, a third application scenario, and the second button operation; and
performing the first function in response to the second button operation comprises:
in response to the second button operation, determining that the third user interface corresponds to the third application scenario; and
performing the function that is of starting the associated application and that corresponds to the third application scenario and the second button operation, and displaying a sixth user interface after performing the function, wherein the sixth user interface comprises at least a third application associated with the third application scenario.

13. The method according to claim 7 or 8, wherein the first correspondence comprises a correspondence between a function of switching to floating-window display, a split-screen display scenario, and the second button operation;
displaying the third user interface comprises:
displaying the application interface of the second application and an application interface of a third application on the display in a split-screen mode; and
performing the first function in response to the second button operation comprises:
in response to the second button operation, determining that the third user interface corresponds to the split-screen display application scenario; and
performing the function that is of switching to floating-window display and that corresponds to the split-screen display scenario and the second button operation; and after performing the function, displaying the application interface of the second application on the display in a full-screen mode, and displaying the application interface of the third application in a floating window.

14. The method according to claim 7 or 8, wherein the first correspondence comprises a correspondence between a function of switching to split-screen display, a floating-window display scenario, and the second button operation;
displaying the third user interface comprises:
displaying the application interface of the second application on the display in a full-screen mode, and displaying an application interface of a third application in a floating window; and
performing the first function in response to the second button operation comprises:
in response to the second button operation, determining that the third user interface corresponds to the floating-window display application scenario; and
performing the function that is of switching to split-screen display and that corresponds to the floating-window display scenario and the second button operation, and displaying the application interface of the second application and the application interface of the third application on the display in a split-screen mode after performing the function.

15. The method according to claim 7 or 8, wherein the first correspondence comprises a correspondence between a function of switching an inter-application display mode, a floating-window display scenario, and the second button operation;
displaying the third user interface comprises:
displaying the application interface of the second application on the display in a full-screen mode, and displaying an application interface of a third application in a floating window; and
performing the first function in response to the second button operation comprises:
in response to the second button operation, determining that the third user interface corresponds to the floating-window display application scenario; and
performing the function that is of switching the inter-application display mode and that corresponds to the floating-window display scenario and the second button operation; and after performing the function, displaying the application interface of the second application in the floating window, and displaying the application interface of the third application on the display in the full-screen mode.

16. The method according to claim 8 or 9, wherein the electronic device comprises an inner screen and an outer screen, and the first correspondence comprises a correspondence between a function of pushing content from the inner screen to the outer screen, an inner-screen display scenario, and the second button operation;
displaying the third user interface comprises:
displaying the third user interface on the inner screen, wherein the third user interface comprises first content; and
performing the first function in response to the second button operation comprises:
in response to the second button operation, determining that the third user interface corresponds to the outer-screen display application scenario; and
displaying the first content on the outer screen.

17. The method according to claim 8 or 9, wherein the second button operation comprises any one of the following operations:
a button tap operation; a button press and hold operation; a button double-tap operation; a button triple-tap operation; a button combination operation, wherein
the button combination operation comprises a combination operation on at least two physical buttons in a power button, a volume up button, a volume down button, and the first button.

18. An electronic device, comprising a processor, a memory, a first button, and a display, wherein
the display is configured to display a user interface; and
the first button is configured to receive a button operation; and
the memory is configured to store one or more computer programs, and when the computer program is executed by the processor, the electronic device is enabled to perform the method according to any one of claims 1 to 17.

19. A computer-readable storage medium, wherein the computer-readable storage medium comprises a computer program, and when the computer program is run on an electronic device, the electronic device is enabled to perform the method according to any one of claims 1 to 17.

20. A computer program product, wherein the computer program product stores a computer program, the computer program comprises program instructions, and when the program instructions are executed by a computer, the computer is enabled to perform the method according to any one of claims 1 to 17.
